# EUROPEAN PATENT SPECIFICATION

(11) **EP 4 465 279 B1**
(45) Date of publication and mention of the grant of the patent: **09.09.2026**
(21) Application number: 22920161.1
(22) Date of filing: 11.01.2022
(51) Int. Cl.: G06F 7/58, G09C 1/00, H04L 9/08

(54) **SECRET RANDOM NUMBER CALCULATION SYSTEM, SECRET RANDOM NUMBER CALCULATION DEVICE, SECRET RANDOM NUMBER CALCULATION METHOD, SECRET CLUSTER CALCULATION SYSTEM, SECRET CLUSTER CALCULATION DEVICE, SECRET CLUSTER CALCULATION METHOD, AND PROGRAM**
GEHEIMES ZUFALLSZAHLENBERECHNUNGSSYSTEM, GEHEIMES ZUFALLSZAHLENBERECHNUNGSVERFAHREN, GEHEIMES CLUSTERBERECHNUNGSSYSTEM, GEHEIMES CLUSTERBERECHNUNGSVERFAHREN UND PROGRAMM
SYSTÈME DE CALCUL DE NOMBRE SECRET ALÉATOIRE, DISPOSITIF DE CALCUL DE NOMBRE SECRET ALÉATOIRE, PROCÉDÉ DE CALCUL DE NOMBRE SECRET ALÉATOIRE, SYSTÈME DE CALCUL DE GRAPPE SECRÈTE, DISPOSITIF DE CALCUL DE GRAPPE SECRÈTE, PROCÉDÉ DE CALCUL DE GRAPPE SECRÈTE ET PROGRAMME

(43) Date of publication of application: 20.11.2024
(73) Proprietor: NTT, Inc., Tokyo 100-8116 (JP)
(72) Inventor: MISHINA, Ibuki, Musashino-shi, Tokyo 180-8585 (JP); IKARASHI, Dai, Musashino-shi, Tokyo 180-8585 (JP); HAMADA, Koki, Musashino-shi, Tokyo 180-8585 (JP); KIKUCHI, Ryo, Musashino-shi, Tokyo 180-8585 (JP)
(74) Representative: MERH-IP Matias Erny Reichl Hoffmann Patentanwälte PartG mbB
(86) International application number: PCT/JP2022/000519
(87) International publication number: WO 2023/135635

(56) References cited:
- US-A1- 2018 053 442
- MAHIR CAN DOGANAY ET AL: "Distributed privacy preserving k-means clustering with additive secret sharing", PRIVACY AND ANONYMITY IN INFORMATION SOCIETY, ACM, 2 PENN PLAZA, SUITE 701 NEW YORK NY 10121-0701 USA, 29 March 2008 (2008-03-29), pages 3 - 11, XP058089058, ISBN: 978-1-59593-965-4, DOI: 10.1145/1379287.1379291
- DAOUDI SARA ET AL: "Parallelization of the K-Means++ Clustering Algorithm", REVUE DES SCIENCES ET TECHNOLOGIES DE L'INFORMATION / ING?NIERIE DES SYST?MES D'INFORMATION: ING?NIERIE DES SYST?MES D'INFORMATION : S?RIE ISI-NIS, vol. 26, no. 1, 28 February 2021 (2021-02-28), FR, pages 59 - 66, XP093322282, ISSN: 1633-1311, DOI: 10.18280/isi.260106
- PAYMAN MOHASSEL ; MIKE ROSULEK ; NI TRIEU: "Practical Privacy-Preserving K-means Clustering", IACR, INTERNATIONAL ASSOCIATION FOR CRYPTOLOGIC RESEARCH, vol. 20191007:082525, 5 October 2019 (2019-10-05), International Association for Cryptologic Research , pages 1 - 30, XP061033668
- JAIDEEP VAIDYA ; CHRIS CLIFTON: "Privacy-preserving k-means clustering over vertically partitioned data", PROCEEDINGS OF THE 9TH. ACM SIGKDD INTERNATIONAL CONFERENCE ON KNOWLEDGE DISCOVERY AND DATA MINING. KDD-2003. WASHINGTON, DC, AUG. 24 - 27, 2003., NEW YORK, NY : ACM., US, 24 August 2003 (2003-08-24) - 27 August 2003 (2003-08-27), US , pages 206 - 215, XP058082821, ISBN: 978-1-58113-737-8, DOI: 10.1145/956750.956776
- MAHIR CAN DOGANAY ; THOMAS B. PEDERSEN ; YüCEL SAYGIN ; ERKAY SAVAş ; ALBERT LEVI: "Distributed privacy preserving k-means clustering with additive secret sharing", PRIVACY AND ANONYMITY IN INFORMATION SOCIETY, ACM, 2 PENN PLAZA, SUITE 701 NEW YORK NY 10121-0701 USA, 29 March 2008 (2008-03-29) - 29 March 2008 (2008-03-29), 2 Penn Plaza, Suite 701 New York NY 10121-0701 USA , pages 3 - 11, XP058089058, ISBN: 978-1-59593-965-4, DOI: 10.1145/1379287.1379291
- "Trust Management VI", vol. 374, 1 January 2012, SPRINGER BERLIN HEIDELBERG, Berlin, Heidelberg, ISBN: 978-3-642-29852-3, ISSN: 1868-4238, article PATEL SANKITA, GARASIA SWETA, JINWALA DEVESH: "An Efficient Approach for Privacy Preserving Distributed K-Means Clustering Based on Shamir’s Secret Sharing Scheme", pages: 129 - 141, XP093080071, DOI: 10.1007/978-3-642-29852-3_9
- GEETHA JAGANNATHAN ; REBECCA N. WRIGHT: "Privacy-preserving distributed k-means clustering over arbitrarily partitioned data", PROCEEDINGS OF THE 11TH. ACM SIGKDD INTERNATIONAL CONFERENCE ON KNOWLEDGE DISCOVERY AND DATA MINING. KDD-2005, CHICAGO, IL, AUG. 21 - 24, 2005., ACM, NEW YORK, NY , US, 21 August 2005 (2005-08-21) - 24 August 2005 (2005-08-24), NEW YORK, NY , US , pages 593 - 599, XP058100248, ISBN: 978-1-59593-135-1, DOI: 10.1145/1081870.1081942

## Description

### Technical Field

The present invention relates to a secure computation technology, and more particularly to a technology for secure computation of a random number that can be used in the k-means++ method.

### Background Art

As a technology for classifying a plurality of pieces of data, there is a technology (hereinafter, referred to as a clustering technology) for classifying similar pieces of data into one cluster. Examples of the clustering technology include the k-means method described in Non Patent Literature 1 and the k-means++ method described in Non Patent Literature 2.

The secure computation is a method of obtaining an operation result of a designated operation without restoring an encrypted numerical value (for example, see Reference Non Patent Literature 1). In the method of Reference Non Patent Literature 1, encryption of distributing a plurality of pieces of information capable of restoring numerical values to three secure computation devices is performed, and thus the results of addition/subtraction, constant addition, multiplication, constant multiplication, logical operation (NOT, logical product, logical sum, exclusive logical sum), data format conversion (integer and binary number), and the like can be held in a state of being distributed to the three secure computation devices without restoring the numerical values, that is, in an encrypted state. In general, the distribution number is not limited to three and may be W (W is a predetermined constant of three or more), and a protocol that achieves secure computation by cooperative calculation by W secure computation devices is called a multi-party protocol.
Non Patent Literature 3 generally concentrates on a distributed scenario where the data is partitioned vertically over multiple sites and the involved sites would like to perform clustering without revealing their local databases. For this setting, Non Patent Literature 3 generally proposes a new protocol for privacy preserving k-means clustering based on additive secret sharing.
Non Patent Literature 4 generally develops a new parallel k-means++ algorithm using the graphics processing units (GPU) where the Open Computing Language (OpenCL) platform is used as the programming environment to perform the data assignment phase in parallel while the Streaming SIMD Extension (SSE) technology is used to perform the initialization step to select the initial centroids in parallel on CPU.
Patent Literature 1 generally relates to a secret sharing technique, and, more particularly, to a technique of, in the case where part of shares among secretly shared values is lost, recovering the lost shares.

(Reference Non Patent Literature 1: Koji Chida, Koki Hamada, Dai Igarashi, Katsumi Takahashi, "Keiryo kensho kano 3 party hitoku kansu keisan no saiko (in Japanese) (A Three-Party Secure Function Evaluation with Lightweight Verifiability Revisited)", In CSS, 2010.)

### Citation List

### Non Patent Literature

Non Patent Literature 1: John A Hartigan and Manchek A Wong, "Algorithm AS 136: A K-Means Clustering Algorithm", Journal of the Royal Statistical Society. Series C (Applied Statistics), Vol. 28, No. 1, pp. 100-108, 1979.
Non Patent Literature 2: David Arthur and Sergei Vassilvitskii, "k-means++: the advantages of careful seeding", Technical report, Stanford University, 2006.
Non Patent Literature 3: MAHIR CAN DOGANAY ET AL: "Distributed privacy preserving k-means clustering with additive secret sharing", PRIVACY AND ANONYMITY IN INFORMATION SOCIETY, ACM, 29 March 2008, pages 3 - 11.
Non Patent Literature 4: DAOUDI SARA ET AL: "Parallelization of the K-Means++ Clustering Algorithm", REVUE DES SCIENCES ET TECHNOLOGIES DE L'INFORMATION, vol. 26, no. 1, 28 February 2021, pages 59 - 66.

### Patent Literature

Patent Literature 1: US 2018/053442 A1

### Summary of Invention

### Technical Problem

The k-means method is said to be a method in which generation of clusters greatly depends on how to provide an initial value. Therefore, when a completely random initial value is given to generate a cluster, a preferable result may not be obtained. Therefore, in the plaintext k-means method, the initial value is generated using the k-means++ method that can easily obtain a better result than giving a completely random initial value.

However, no secure computation method for the k-means++ method has been proposed so far. This is because a random number generation method using weighted probability distribution that can be used in the k-means++ method has not been proposed so far.

Therefore, an object of the present invention is to provide a technology for performing secure computation of a random number generation method using weighted probability distribution with high accuracy while keeping data secure.

### Solution to Problem

The present invention provides a secure random number computation system, a secure random number computation device, a secure random number computation method, a secure cluster computation system, a secure cluster computation device, a secure cluster computation method, and corresponding programs, having the features of respective independent claims. The dependent claims relate to preferred embodiments.

An aspect of the present invention is a secure random number computation system having L and S being integers of 1 or more, including three or more secure random number computation devices, configured to compute a share ([[r₁]], ..., [[r_{S}]]) of a vector (r₁, ..., r_{S}) (where rᵢ (i = 1, ..., S) is equal to one of output possibility values x₁, ..., x_{L}) having an output value as an element, from a share ([[x₁]], ..., [[x_{L}]]) of a vector (x₁, ..., x_{L}) having an output possibility value as an element and a share ([[p₁]], ..., [[p_{L}]]) of a vector (p₁, ..., p_{L}) (where pᵢ (i = 1, ..., L) is a probability that the output possibility value xᵢ is output, and satisfies Σpᵢ = 1) having an output probability as an element, the secure random number computation system including: first vector computation means that computes a share ([[p'₁]], ..., [[p'_{L}]]) of a vector (p'₁, ..., p'_{L}) from the share ([[p₁]], ..., [[p_{L}]]) of the vector (p₁, ..., P_{L}) by ([[p'₁]], ..., [[p'_{L}]]) = prefix_sum(([[p₁]], ..., [[p_{L}]])); uniform random number generation means that generates a share ([[q₁]], ..., [[q_{S}]]) of a vector (q₁, ..., q_{S}) (where qᵢ (i = 1, ..., S) is a uniform random number, and satisfies 0 ≤ qᵢ ≤ 1) having a uniform random number as an element; and random number computation means that computes a share ([[r₁]], ..., [[r_{S}]]) of a vector (r₁, ..., r_{S}) having an output value as an element from the share ([[p'₁]], ..., [[p'_{L}]]) of the vector (p'₁, ..., p'_{L}), the share ([[x₁]], ..., [[x_{L}]]) of the vector (x₁, ..., x_{L}), and the share ([[q₁]], ..., [[q_{S}]]) of the vector (q₁, ..., q_{S}) by ([[r₁]], ..., [[r_{S}]]) = map(([[p'₁]], ..., [[p'_{L}]]), ([[x₁]], ..., [[x_{L}]]), ([[q₁]], ..., [[q_{S}]])).

### Advantageous Effects of Invention

According to the present invention, it is possible to perform secure computation of a random number generation method using weighted probability distribution with high accuracy while keeping data secure.

### Brief Description of Drawings

Fig. 1 is a diagram illustrating a situation of groupBySum operation.
Fig. 2 is a diagram illustrating a situation of groupByCount operation.
Fig. 3 is a diagram illustrating an example of a cluster ID table.
Fig. 4 is a diagram illustrating an example of a data table.
Fig. 5 is a diagram illustrating an example of a centroid table.
Fig. 6 is a diagram illustrating an example of a distance table.
Fig. 7 is a block diagram illustrating a configuration of a secure random number computation system 10.
Fig. 8 is a block diagram illustrating a configuration of a secure random number computation device 100ᵢ.
Fig. 9 is a flowchart illustrating operation of the secure random number computation system 10.
Fig. 10 is a block diagram illustrating a configuration of a secure cluster computation system 20.
Fig. 11 is a block diagram illustrating a configuration of a secure cluster computation device 200ᵢ.
Fig. 12 is a flowchart illustrating operation of the secure cluster computation system 20.
Fig. 13 is a block diagram illustrating a configuration of a centroid table initialization unit 210ᵢ.
Fig. 14 is a flowchart illustrating operation of centroid table initialization means 210.
Fig. 15 is a diagram illustrating an example of a functional configuration of a computer that implements each device according to an embodiment of the present invention.

### Description of Embodiments

Hereinafter, an embodiment of the present invention will be described in detail. Note that components having the same functions are denoted by the same reference numerals, and redundant description will be omitted.

Prior to the description of each embodiment, a notation method in the present specification will be described.

^ (caret) represents a superscript. For example, x^{y^z} represents that y^{z} is a superscript for x, and x_{y^z} represents that y^{z} is a subscript for x. Furthermore, _(underscore) represents a subscript. For example, x^{y_z} represents that y_{z} is a superscript for x, and x_{y_z} represents that y_{z} is a subscript for x.

A superscript "^" or "~" such as ^x or ~x for a certain letter x would normally be placed directly above "x", but is written as ^x or ~x due to restrictions on notation in the specification.

### <Technical Background>

### <<Secure Computation>>

The secure computation in the invention of the present application is constructed by a combination of existing secure computation operations. The operations necessary for the secure computation are concealment, addition, subtraction, multiplication, division, logical operation (NOT, logical product, logical sum, exclusive logical sum), comparison operation (=, <, >, ≤, ≥), secure sorting, secure unique check, Group-by operation, prefix_sum (prefix sum), and secure collective mapping. Hereinafter, some operations including the notation will be described.

### [Concealment]

It is assumed that [[x]] is a value (hereinafter, referred to as a share of x) obtained by concealing x by secure distribution. Any known method can be used as the secure distribution method. For example, the Shamir's secure distribution on GF(2⁶¹-1) and the duplication secure distribution on Z₂ can be used.

A plurality of secure distribution methods may be used in combination in one algorithm. In this case, mutual conversion is appropriately performed.

For the N-dimensional vector ^{→}x = (x₁, ..., x_{N}), [[^{→}x]] = ([[x₁]], ..., [[x_{N}]]) is set. That is, [[^{→}x]] is a vector having the share [[xₙ]] of the n-th element xₙ of ^{→}x as the n-th element. As similar to this, also for the M × N matrix A = (a_{m,n}) (1 ≤ m ≤ M, 1 ≤ n ≤ N), [[A]] is set as a matrix having the share [[a_{m,n}]] of the (m, n) th element a_{m,n} of A as the (m, n)-th element.

x is referred to as a plaintext of [[x]].

As a method of obtaining [[x]] from x (concealment) and a method of obtaining x from [[x]] (restoration), specifically, there are methods described in Reference Non Patent Literature 1 and Reference Non Patent Literature 2.

### (Non Patent Literature 2: Shamir, A., "How to share a secret", Communications of the ACM, Vol. 22, No. 11, pp. 612-613, 1979.)

### [Addition, Subtraction, Multiplication, and Division]

The addition [[x]]+[[y]] by secure computation uses [[x]], [[y]] as inputs and outputs [[x+y]]. The subtraction [[x]]-[[y]] by secure computation uses [[x]], [[y]] as inputs, and outputs [[x-y]]. The multiplication [[x]]×[[y]] (sometimes represented as mul([[x]], [[y]])) by secure computation uses [[x]], [[y]] as inputs, and outputs [[x×y]]. The division [[x]]/[[y]] (sometimes represented as div([[x]], [[y]])) by the secure computation uses [[x]], [[y]] as inputs, and outputs [[x/y]].

As specific methods of addition, subtraction, multiplication, and division, there are methods described in Reference Non Patent Literature 3 and Reference Non Patent Literature 4.

### (Reference Non Patent Literature 3: Ben-Or, M., Goldwasser, S. and Wigderson, A., "Completeness theorems for non-cryptographic fault-tolerant distributed computation", Proceedings of the twentieth annual ACM symposium on Theory of computing, ACM, pp. 1-10, 1988.)

### (Reference Non Patent Literature 4: Gennaro, R., Rabin, M. O. and Rabin, T., "Simplified VSS and fast-track multiparty computations with applications to threshold cryptography", Proceedings of the seventeenth annual ACM symposium on Principles of distributed computing, ACM, pp. 101-111, 1998.)

For the share [[^{→}x]] = ([[x₁]], ..., [[x_{N}]]) of the N-dimensional vector ^{→}x = (x₁, ..., x_{N}) and the share [[^{→}y]] = ([[y₁]], ..., [[y_{N}]]) of the N-dimensional vector ^{→}y = (y₁, ..., y_{N}), the division [[^{→}x]]/[[^{→}y]] by the secure computation is set as [[^{→}x/^{→}y]] = ([[x₁/y₁]], ..., [[x_{N}/y_{N}]]). [[^{→}x]] / [[^{→}y]] is also referred to as a value obtained by dividing [[^{→}x]] by [[^{→}y]].

### [Logical Operation]

Not [[x]] based on secure computation uses [[x]] as inputs, and outputs [not(x)]. The logical product and ([[x]], [[y]]) by the secure computation uses [[x]], [[y]] as inputs, and outputs [[and(x, y)]]. The logical sum or ([[x]], [[y]]) by secure computation uses [[x]], [[y]] as inputs and outputs [[or(x, y)]]. An exclusive OR xor ([[x]], [[y]]) by secure computation uses [[x]], [[y]] as inputs and outputs [[xor(x, y)]].

The logical operation can be easily configured by combining addition, subtraction, multiplication, and division.

### [Comparison Operation]

The equal sign determination =([[x]], [[y]]) (sometimes represented as equal([[x]], [[y]])) by secure computation uses [[x]], [[y]] as inputs, and outputs [[1]] when x = y, and outputs [[0]] otherwise. The comparison <([[x]], [[y]]) by secure computation uses [[x]], [[y]] as inputs, and outputs [[1]] when x < y, and [[0]] otherwise. The comparison by secure computation >([[x]], [[y]]) uses [[x]], [[y]] as inputs, and outputs [[1]] when x > y, and [[0]] otherwise. The comparison ≤([[x]], [[y]]) by secure computation uses [[x]], [[y]] as inputs, and outputs [[1]] when x ≤ y, and outputs [[0]] otherwise. The comparison ≥([[x]], [[y]]) by secure computation uses [[x]], [[y]] as inputs, and outputs [[1]] when x ≥ y, and outputs [[0]] otherwise.

The comparison operation can be easily configured by combining logical operations.

### [Secure Sorting]

The secure sorting uses the share [[^{→}x]] of the N-dimensional vector ^{→}x = (x₁, ..., x_{N}) as inputs, and outputs a vector sort ([[^{→}x]]): = ([[x_{i_1}]], ..., [[x_{i_N}]]) (where x_{i_1}, ..., and x_{i_N} satisfy x_{i_1} ≤ x_{i_2} ≤ ... ≤ x_{i_N}) obtained by sorting the elements [[x₁]], ..., [[x_{N}]] of [[x]] in ascending order. For a table T in which each element of any attribute is concealed, a table in which the table T is subjected to secure sorting with the attribute α of the table T as a key is a table exchanged record by record so that the values of the elements of the attribute α are in ascending order from the first record.

As a specific method of secure sorting, there is a method described in Reference Non Patent Literature 5.

### (Reference Non Patent Literature 5: Hiroshi Igarashi, Hiroki Hamada, Ryo Kikuchi, Koji Chida, "A Design and an Implementation of Super-High-Speed Multi-Party Sorting: The Day When Multi-Party Computation Reaches Scripting Languages", Computer Security Symposium (CSS), 2017.)

### [Secure Unique Check]

The secure unique check uses the share [[^{→}x]] of the N-dimensional vector ^{→}x = (x₁, ..., x_{N}) as an input, and outputs a vector unique_check ([[^{→}x]]) : = ([[x_{i_1}]], ..., [[x_{i_N}]]) (where x_{i_1}, ..., x_{i_N} are either 1 or 0) substituted with [[1]] for the element that appears in the first time and [[0]] for the elements that appear in the second and subsequent times when the same value appears twice or more in the elements [[x₁]], ..., [[x_{N}]] of [[^{→}x]]. For example, executing the secure unique check on the vector ([[1]], [[2]], [[2]], [[3]], [[3]], [3]]) results in ([[1]], [[1]], [[0]], [[1]], [[0]], [0]]).

The secure unique check can be easily configured by combining secure sorting and comparison operation.

### [Group-by Operation]

The Group-by operation is an operation for obtaining a statistical value (for example, average height for each gender) grouped for each value of an element of a key attribute in a case where a table has a key attribute (for example, gender) and a value attribute (for example, height) and each element of any attribute of the table is concealed. A case in which the computed statistical value is a sum is a groupBySum operation, and a case in which the computed statistical value is a frequency is a groupByCount operation.

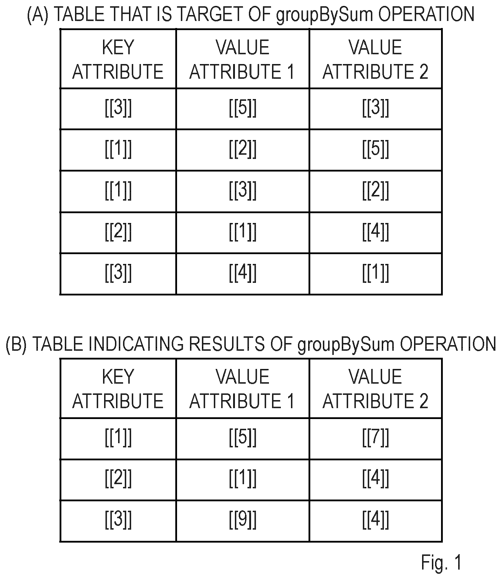

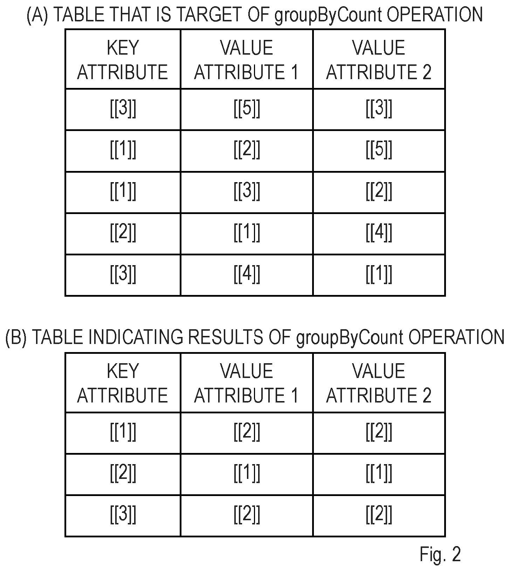

Fig. 1 is a diagram illustrating an example of groupBySum operation. As can be seen from the example of Fig. 1, in the table representing the result of the groupBySum operation, the values of the elements of the key attribute are arranged in ascending order from the first record, and the sum of the elements of the value attribute 1 and the sum of the elements of the value attribute 2 are obtained for each value of the element of the key attribute. Fig. 2 is a diagram illustrating an example of groupByCount operation. As can be seen from the example of Fig. 2, in the table representing the result of the groupByCount operation, the values of the key attribute are arranged in ascending order from the first record, and the number of the elements of the value attribute 1 and the number of the elements of the value attribute 2 are obtained for each value of the element of the key attribute.

As a specific method of Group-by operation, there is a method described in Reference Non Patent Literature 6.

### (Reference Non Patent Literature 6: Ryo Kikuchi, Koki Hamada, Dai Ikarashi, Gen Takahashi, Katsumi Takahashi, "Oudanteki dousen bunseki wo himitsu keisan de yattemiyou (Let's Conduct Cross-Sectional Traffic Line Analysis by Secure Computation)", 2020 Symposium on Cryptography and Information Security, 3C2-1, 2020.)

In the Group-by operation disclosed in Reference Non Patent Literature 6, various Group-by operations are efficiently performed by using a groupByCommon operation.

### [prefix_sum (Prefix Sum)]

prefix_sum uses the share [[^{→}x]] of the N-dimensional vector ^{→}x = (x₁, ..., x_{N}) as an input, and outputs the share [[^{→}y]] = ([[y₁]], ..., [y_{N}]) (where yᵢ = Σⱼ₌₁ⁱxⱼ) of the N-dimensional vector ^{→}y.

### [Secure Collective Mapping]

The secure collective mapping is a function of calculating a lookup table, and can arbitrarily determine two vectors used to define the lookup table. Since secure collective mapping performs processing in units of vectors, there is a property that efficiency is high when the same processing is performed on a plurality of inputs. The secure collective mapping is a function map defined as follows.

The secure collective mapping uses the share [[^{→}a]] = ([[a₁]], ..., [[a_{K}]]) of the vector ^{→}a = (a₁, ..., a_{K}), the share [[^{→}b]] = ([[b₁]], ..., [[b_{K}]]) of the vector ^{→}b = (b₁, ..., b_{K}) (where a₁, ..., a_{K}, b₁, ..., b_{K} are real numbers, and satisfy a₁ < ... < a_{K}), and the share [^{→}x] = ([[x₁]], ..., [[x_{N}]]) of the vector ^{→}x = (x₁, ..., x_{N}) as inputs, and outputs [[^{→}y]]: = ([[y₁]], ..., [y_{N}]) such that aₚ ≤ xₙ < aₚ₊₁ and yₙ = bₚ are satisfied for 1 ≤ n ≤ N, that is, the share obtained by mapping the share of each element of the vector ^{→}x. At this time, [[^{→}y]] = map([[^{→}a], [[^{→}b]], [[^{→}x]]) is expressed. The vector ^{→}a and the vector ^{→}b are two vectors used to define the lookup table. For example, when the shares of the two vectors ^{→}a and ^{→}b used for defining the lookup table are ([[50], [[80]], [[100]]), ([[1]], [[2]], [3]), respectively, map(([[50], [[80]], [[100]]), ([[1]], [[2]], [[3]]), ([[5], [[68]], [[91]])) = ([[1]], [[2]], [[3]]) is obtained.

As the secure collective mapping, for example, the algorithm described in Reference Non Patent Literature 7 can be used.

### (Reference Non Patent Literature 7: Koki Hamada, Dai Igarashi, Koji Chida, "A Batch Mapping Algorithm for Secure Function Evaluation", IEICE A, Vol. J96-A, No. 4, pp. 157-165, 2013.)

### <<k-means Method>>

The k-means method is one of machine learning methods classified as unsupervised learning. In supervised learning such as regression analysis and class classification, desired output (called training data) is prepared, and its object is to construct a model that reproduces the output with high accuracy, whereas in unsupervised learning such as clustering, desired output is not determined in advance.

In clustering, distances between a plurality of pieces of given data are computed, and pieces of data having close distances are put together into clusters as similar data. The clustering includes a non-hierarchical method in which the number of clusters to be generated is determined in advance such as the k-means method, and a hierarchical method in which the number of clusters to be generated is not determined in advance, and clusters are sequentially formed from the most similar pieces of data (that is, pieces of data having a minimum distance). The k-means method has a feature that the amount of calculation is less likely to increase even when large-scale data is clustered as compared with the hierarchical method, and thus, is often used for data of a scale that cannot be handled by the hierarchical method.

The flow of processing in the k-means method is as follows.
(1) The number K of clusters to be generated and M pieces of data to be clustered are input. Each data is represented by an N-dimensional vector. Each dimension represents a feature amount of data.
(2) The initial values of the K centroids are set. Here, the centroid is a centroid of data included in the cluster. As a method of setting an initial value, there are a Forgy method, in which K pieces of data randomly selected from M pieces of data are set as centroids, and a k-means++ method.
(3) For each pair of data and centroid, the distance is computed. As the distance, for example, a Euclidean distance is used.
(4) A cluster having a minimum distance to the centroid is assigned to each data as a cluster to which the data belongs.
(5) For each cluster, a centroid is computed.
(6) When a predetermined end condition is satisfied, the cluster assignment result with respect to the data obtained in (4), that is, the information representing the cluster to which the data belongs is output, and in other cases, the processing of (3) to (5) is performed. The predetermined end condition is, for example, a condition of whether each of the K centroids has converged to a certain position, or a condition of whether the number of executions of the processing of (3) to (5) has reached a predetermined number of times.

### <<k-means++ Method>>

In the k-means++ method, the initial value of the centroid is set on the basis of the idea that the centroids selected from the data as the initial value are preferably separated from each other as much as possible.

The flow of processing in the k-means++ method is as follows.
(1) One piece of data randomly selected from the M pieces of data is set as a first centroid.
(2) For data that is not selected as a centroid, a distance to each centroid is computed, and the square of the distance to the centroid at which the distance to the data is minimum is computed.
(3) With respect to the square of the distance computed in (2), a value obtained by dividing the square of the distance by the sum of the squares of the distance is obtained, and a vector having the divided value as an element is generated.
(4) Using a random number generation method using weighted probability distribution, one data ID of data not selected as a centroid is selected from a vector having a data ID of data not selected as a centroid as an element and the vector generated in (3), and data of the selected data ID is set as the centroid.
(5) The processing of (2) to (4) are performed until K centroids are selected.

### <<Random Number Generation Method Using Weighted Probability Distribution>>

In the random number generation method using the weighted probability distribution, a vector (x₁, ..., x_{L}) having an output possibility value as an element and a vector (p₁, ..., p_{L}) (where pᵢ (i = 1, ..., L) is a probability that the output possibility value xᵢ is output, and Σpᵢ = 1 is satisfied) having an output probability as an element are input, and a vector (r₁, ..., rₛ) (where rᵢ (i = 1, ..., S) is equal to one of the output possibility values x₁, ..., x_{L}) having an output value as an element is output. Here, rᵢ (i = 1, ..., S) is selected according to the distribution of the output probability. For example, when a random number is generated using a vector (1, 2, 3) having an output possibility value as an element and a vector (0.5, 0.3, 0.2) having an output probability as an element, 1 is output with a probability of 0.5, 2 is output with a probability of 0.3, and 3 is output with a probability of 0.2.

### <<Secure k-means Method>>

The secure k-means method is a method of performing secure computation of the k-means method, and the method is secure except for the number M of data and the number K of clusters. In a case where the convergence determination condition as described above is used as the end condition, it is necessary to decode one-bit information indicating "whether each of the K centroids has converged to a certain position" for each convergence determination, but all the other information is processed while being concealed. For example, the M pieces of data, the K pieces of centroids, the distance between the data and the centroid, the information indicating the cluster to which the data belongs, and the number of pieces of data included in the cluster are processed while being concealed.

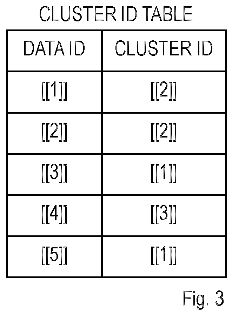

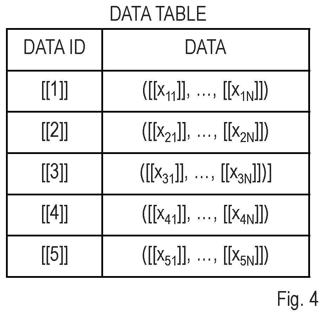

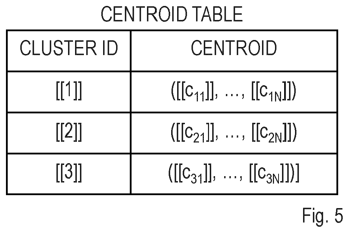

Next, a table handled by the secure k-means method will be described. In the k-means method, it is necessary to handle information indicating a cluster to which data belongs. Here, as illustrated in Fig. 3, management is performed by using a table (hereinafter, referred to as a cluster ID table) in which data IDs of M pieces of data and cluster IDs of K clusters are associated on a one-to-one basis. It is assumed that all IDs are dispensed in order from 1. The M pieces of data are managed using a table (hereinafter, referred to as a data table) in which a data ID and data of the data ID are associated with each other as illustrated in Fig. 4. The K centroids are managed using a table (hereinafter, referred to as a centroid table) in which a cluster ID and a centroid of a cluster of the cluster ID are associated with each other as illustrated in Fig. 5. Among the three tables, the data table is not rewritten in the middle of the processing, while the cluster ID table and the centroid table are appropriately rewritten.

The processing flow in the secure k-means method is the same as the processing flow in the k-means method, and is different only in whether secure computation is performed. The way of performing the processing of (3) to (5) using the above three tables will be described below.

### [Calculation of Distance Between Data and Centroid]

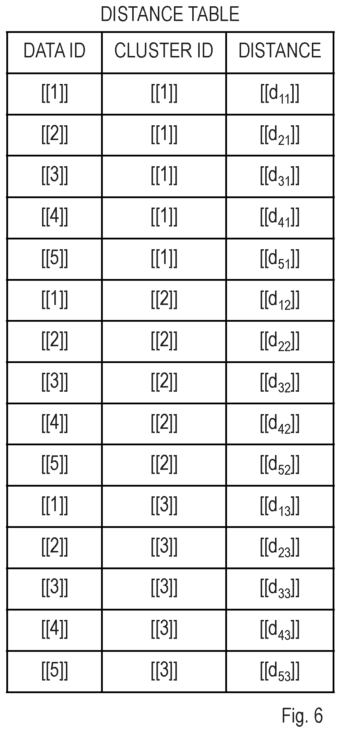

Here, processing of (3) will be described. In the processing, the distance between the data of the data ID and the centroid of the cluster of the cluster ID is computed for all combinations of the data ID and the cluster ID using the data table and the centroid table. However, in order to facilitate the subsequent processing, the calculation results are summarized in a distance table as illustrated in Fig. 6.

### [Assignment of Clusters]

Here, the processing of (4) will be described. In the processing, the cluster ID table is updated using the distance table obtained in the processing of (3) such that a cluster having the minimum distance to the centroid is paired with each data. That is, in the cluster ID table, the cluster ID paired with the data ID is the cluster ID of the cluster including the centroid having the minimum distance from the data of the data ID. For this purpose, a cluster ID of a cluster having the minimum distance to the data of the data ID for each data ID is extracted from the distance table. Specifically, the following processing is performed.
(4-1) The distance table is secure sorted by using the distance attribute as a key.
(4-2) The secure unique check is performed on the element column of the data ID attribute of the table generated in (4-1), and a table, in which the element column obtained as a result of the secure unique check is added to the table generated in (4-1) as the checked data ID attribute, is generated.
(4-3) Only records in which the value of the element of the checked data ID attribute of the table generated in (4-2) is equal to [[1]] are extracted, and a table including these records is generated.
(4-4) The table generated in (4-3) is subjected to secure sorting with the data ID attribute as a key.

A table obtained by extracting the element column of the data ID attribute and the element column of the cluster ID attribute from the table generated in (4-4) is a cluster ID table in which a cluster having the minimum distance to the centroid for each data is paired.

### [Calculation of Centroid]

Here, the processing of (5) will be described. In this process, the centroid table is updated using the cluster ID table obtained in the processing of (4). The centroid is an average of data included in each cluster. Therefore, if the sum of data included in the cluster and the number of data included in the cluster can be obtained for each cluster, the centroid can be obtained. Since each data is expressed as a vector, the centroid can be efficiently obtained by using the groupBySum operation and the groupByCount operation. Specifically, the following processing is performed.
(5-1) The element column of the cluster ID attribute of the cluster ID table is extracted, and the element column of the data ID attribute of the data table is replaced with the element column.
(5-2) The groupBySum operation is performed on the table generated in (5-1) using the data ID attribute as a key.
(5-3) The groupByCount operation is performed on the table generated in (5-1) using the data ID attribute as a key.
(5-4) A value obtained by dividing the value of the element of the data attribute of each record of the table generated in (5-2) by the value of the element of the data attribute of each record of the table generated in (5-3) is obtained.

The value obtained in (5-4) is the centroid of each cluster.

As can be seen from the above description, by performing cluster assignment using secure sorting and secure unique check and performing centroid calculation using groupBySum operation and groupByCount operation, it is possible to safely and efficiently perform secure computation of the k-means method.

### <<Secure Computation of Random Number Generation Method Using Weighted Probability Distribution>>

The input and output in the secure computation of the random number generation method using the weighted probability distribution are as follows.

### (Input)

(1) A share ([[x₁]], ..., [[x_{L}]]) of a vector (x₁, ..., x_{L}) having an output possibility value as an element
(2) A share ([[p₁]], ..., [[p_{L}]]) of a vector (p₁, ..., p_{L}) (where pᵢ (i = 1, ..., L) is a probability that the output possibility value xᵢ is output, and Σpᵢ = 1 is satisfied) having an output probability as an element
(3) Number of output values S
   (Output)
   (1) A share ([[r₁]], ..., [rₛ]]) of a vector (r₁, ..., rₛ) (where rᵢ (i = 1, ..., S) is equal to one of the output possibility values x₁, ..., x_{L}) having an output value as an element

Here, the number S of output values may be the plaintext.

This secure computation is very similar in terms of the processing structure of secure collective mapping that is computed using two vectors for defining the lookup table. Therefore, the secure computation is achieved using the secure collective mapping. A flow of the processing will be described below.
(1) From the share ([[p₁]], ..., [[p_{L}]]) of the vector (p₁, ..., p_{L}), the share ([[p'₁]], ..., [[p'_{L}]]) of the vector (p'₁, ..., p'_{L}) is computed by ([[p'₁]], ..., [[p'_{L}]]) = prefix_sum(([[p₁]], ..., [[p_{L}]])). The share ([[p'₁]], ..., [[p'_{L}]]) corresponds to the share [^{→}a] in the secure collective mapping.
(2) A share ([[q₁]], ..., [[q_{S}]]) of a vector (q₁, ..., q_{S}) (where qᵢ (i = 1, ..., S) is a uniform random number, and satisfies 0 ≤ qᵢ ≤ 1) having a uniform random number as an element is generated.
(3) From the share ([[p'₁]], ..., [[p'_{L}]] ) of the vector (p'₁, ..., p'_{L}), the share ([[x₁]], ..., [[x_{L}]]) of the vector (x₁, ..., x_{L}), and the share ([[q₁]], ..., [[q_{S}]]) of the vector (q₁, ..., q_{S}), the share ([[r₁]], ..., [r_{S}]]) of the vector (r₁, ..., r_{S}) with the output value as an element is computed by ([[r₁]], ..., [r_{S}]]) = map(([[p'₁]], ..., [[p'_{L}]]), ([[x₁]], ..., [[x_{L}]]), ([[q₁]], ..., [[q_{S}]])).

The output values r₁, ..., r_{S} are random numbers generated using the weighted probability distribution.

When ([[x₁]], [[x₂]], [[x₃]]) = ([[1]], [[2]], [[3]]), ([[p₁]], [[p₂]], [[p₃]]) = ([[0.5], [[0.3]], [[0.2]]), ([[p'₁]], [[p'₂]], [[p'₃]]) = ([[0.5], [[0.8]], [[1.0]]) is obtained. Since qᵢ is a uniform random number satisfying 0 ≤ qᵢ ≤ 1, the probability that the uniform random number qᵢ is included in the section [0, 0.5] is 0.5, the probability that the uniform random number qᵢ is included in the section [0.5, 0.8] is 0.3, and the probability that the uniform random number qᵢ is included in the section [0.8, 1.0] is 0.2, and the share ([[r₁]], ..., [[r_{S}]]) of the random numbers according to the weighted probability distribution is obtained by map(([[p'₁]], [[p'₂]], [[p'₃]]), ([[x₁]], [[x₂]], [[x₃]]), ([[q₁]], ..., [[q_{S}]])) = map(([[0.5], [[0.8]], [[1.0]]), ([[1]], [[2]], [[3]]), ([[q₁]], ..., [[q_{S}]])).

In general, each element of the vector (p₁, ..., p_{L}) is a decimal, and thus the calculation cost of the secure computation is very large. Therefore, for example, if secure computation is performed after each element of the vector (p₁, ..., P_{L}) and the vectors (q₁, ..., q_{S}) is converted into an integer by multiplying each element by 100, the calculation cost of the secure computation can be suppressed.

As can be seen from the above description, it is possible to safely and efficiently perform secure computation of the random number generation method using the weighted probability distribution by using the secure collective mapping.

### <<Secure k-means++ Method>>

In the k-means++ method, the weighted probability distribution is used in the processing of (4), and the other processing can be achieved by basic operations such as addition, subtraction, multiplication, and division. Therefore, here, the processing of (4) will be briefly described.

A share ([[k₁]], ..., [[k_{M-j}]]) of a vector (k₁, ..., k_{M-j}) having a data ID of data not selected as a centroid as an element is set as a vector having an output possibility value as an element. A share ([[d_{k_1}²/Σd_{k_m}²]], ..., [[d_{k_(M-j)}²/Σd_{k_m}²]]) of a vector (d_{k_1}²/Σd_{k_m}², ..., d_{k_(M-j)}²/Σd_{k_m}²) (where d_{k_m} is the smallest distance from a distance between the centroid specified by the first record of the centroid table and the data of the data ID kₘ to a distance between the centroid specified by the j-th record of the centroid table and the data of the data ID kₘ) is a vector with the output probability as an element. Furthermore, the number of output values is one.

By performing secure computation of the random number generation method using the weighted probability distribution using these values as inputs, a share [[iⱼ₊₁]] of the output value iⱼ₊₁ equal to any of the data IDs of the data not selected as the centroid is obtained. That is, the share ([[x_{i_(j+1)1}]], ..., [[x_{i_(j+1)N}]]) of the data (x_{i_(j+1)1}, ..., x_{i_(j+1)N}) having the data ID iⱼ₊₁ is the share of the newly obtained centroid.

As can be seen from the above description, it is possible to safely and efficiently perform secure computation of the k-means++ method by using the random number generation method using the weighted probability distribution.

### <First Embodiment>

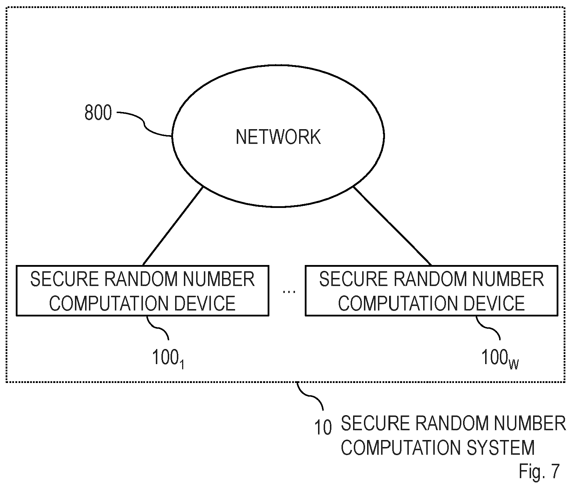

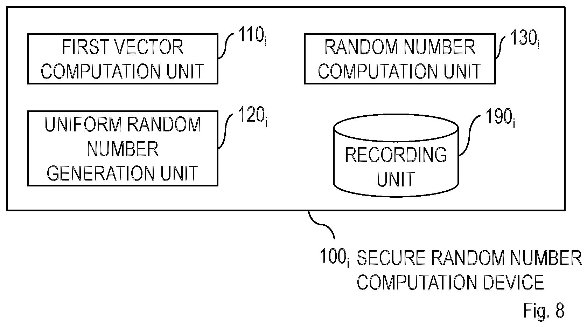

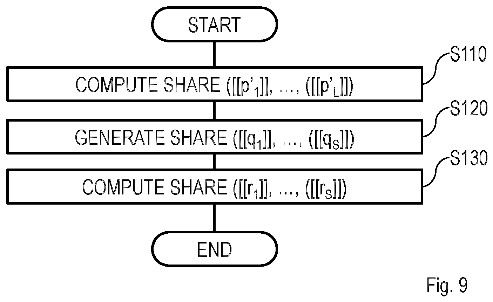

The secure random number computation system 10 will be described below with reference to Figs. 7 to 9. Fig. 7 is a block diagram illustrating a configuration of the secure random number computation system 10. The secure random number computation system 10 includes W (W is a predetermined integer of 3 or more) secure random number computation devices 100₁, ..., 100_{W}. The secure random number computation devices 100₁, ..., 100_{W} are connected to the network 800 and can communicate with each other. The network 800 may be, for example, a communication network such as the Internet, a broadcasting channel, or the like. Fig. 8 is a block diagram illustrating a configuration of a secure random number computation device 100ᵢ(1 ≤ i ≤ W). Fig. 9 is a flowchart illustrating operation of the secure random number computation system 10.

As illustrated in Fig. 8, the secure random number computation device 100ᵢ includes a first vector computation unit 110ᵢ, a uniform random number generation unit 120ᵢ, a random number computation unit 130ᵢ, and a recording unit 190ᵢ. Each component of the secure random number computation device 100ᵢ except for the recording unit 190ᵢ is configured to be able to execute operation required for secure computation, that is, operation required for achieving the function of each component among at least concealment, addition, subtraction, multiplication, division, prefix_sum (prefix sum), and secure collective mapping. As a specific functional configuration for achieving each operation in the present invention, for example, a configuration capable of executing an existing algorithm including the algorithms disclosed in each of Reference Non Patent Literatures 1 to 4 and 7 is sufficient, and since these are conventional configurations, a detailed description thereof will be omitted. The recording unit 190ᵢ is a component that records information necessary for the processing of the secure random number computation device 100ᵢ. For example, the recording unit 190ᵢ may record in advance a share ([[x₁]], ..., [[x_{L}]]) of a vector (x₁, ..., x_{L}) having an output possibility value as an element and a share ([[p₁]], ..., [[p_{L}]]) of a vector (p₁, ..., P_{L}) (where pᵢ (i = 1, ..., L) is a probability that the output possibility value xᵢ is output, and Σpᵢ = 1 is satisfied) having an output probability as an element.

Through cooperative calculation by the W secure random number computation devices 100ᵢ, the secure random number computation system 10 achieves secure computation of a random number generation method using weighted probability distribution that is a multi-party protocol. Therefore, the first vector computation means 110 (not illustrated) of the secure random number computation system 10 includes the first vector computation units 110₁, ..., 110_{W}, the uniform random number generation means 120 (not illustrated) includes the uniform random number generation units 120₁, ..., 120_{W}, and the random number computation means 130 (not illustrated) includes the random number computation units 130₁, ..., 130_{W}.

The secure random number computation system 10 sets L and S to integers of 1 or more, and calculates a share ([[r₁]] , ..., [[r_{S}]]) of a vector (r₁, ..., r_{S}) (where rᵢ (i = 1, ..., S) is equal to one of output possibility values x₁, ..., x_{L}) having an output value as an element from a share ([[x₁]], ..., [[x_{L}]]) of a vector (x₁, ..., x_{L}) having an output possibility value as an element and a share ([[p₁]], ..., [[p_{L}]]) of a vector (p₁, ..., p_{L}) (where pᵢ (i = 1, ..., L) is a probability that the output possibility value xᵢ is output, and Σpᵢ = 1 is satisfied) having an output probability as an element.

The operation of the secure random number computation system 10 will be described with reference to Fig. 9.

In S110, the first vector computation means 110 computes a share ([[p'₁]], ..., [[p'_{L}]]) of a vector (p'₁, ..., p'_{L}) from the share ([[p₁]], ..., [[p_{L}]]) of the vector (p₁, ..., P_{L}) by ([[p'₁]], ..., [[p'_{L}]]) = prefix_sum(([[p₁]], ..., [[p_{L}]])).

In S120, the uniform random number generation means 120 generates a share ([[q₁]], ..., [[qₛ]]) of a vector (q₁, ..., q_{S}) (where qᵢ (i = 1, ..., S) is a uniform random number, and satisfies 0 ≤ qᵢ ≤ 1) having a uniform random number as an element.

In S130, the random number computation means 130 computes a share ([[r₁]], ..., [[r_{S}]]) of a vector (r₁, ..., r_{S}) having an output value as an element from the share ([[p'₁]], ..., [[p'_{L}]]) of the vector (p'₁, ..., p'_{L}) computed in S110, the share ([[x₁]], ..., [[x_{L}]]) of the vector (x₁, ..., x_{L}), and the share ([[q₁]], ..., [[q_{S}]]) of the vector (q₁, ..., q_{S}) generated in S120 by ([[r₁]], ..., [[r_{S}]]) = map(([[p'₁]], ..., [[p'_{L}]]), ([[x₁]], ..., [[x_{L}]]), ([[q₁]], ..., [[q_{S}]])).

According to the embodiment of the present invention, it is possible to perform secure computation of a random number generation method using weighted probability distribution with high accuracy while keeping data secure.

### <Second Embodiment>

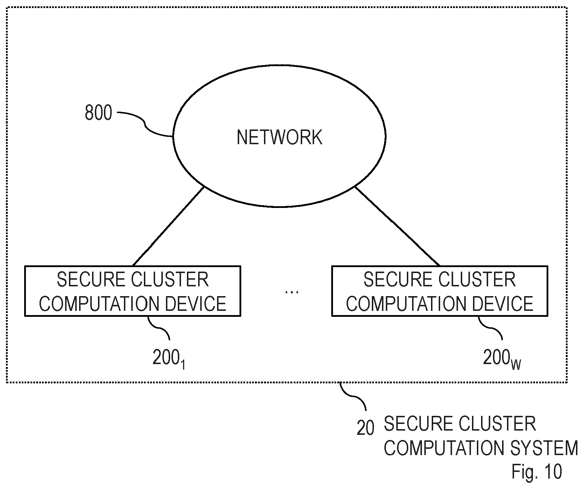

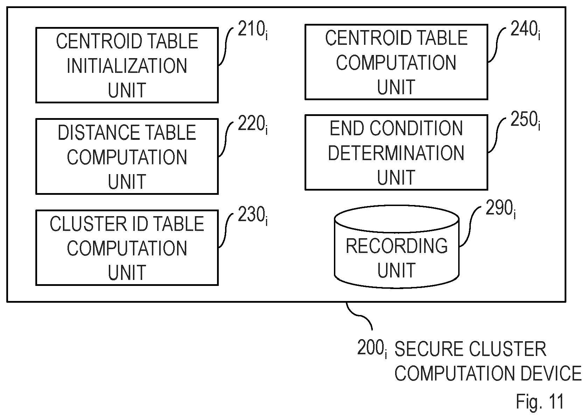

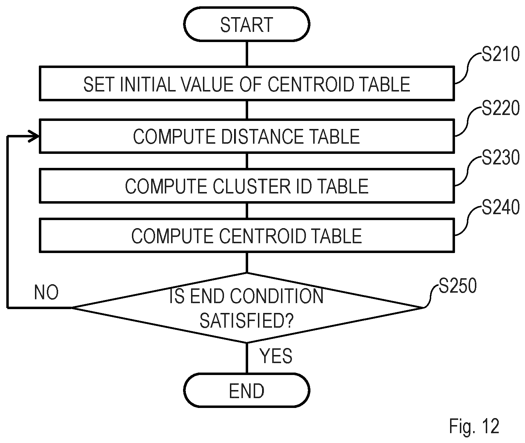

The secure cluster computation system 20 will be described below with reference to Figs. 10 to 12. Fig. 10 is a block diagram illustrating a configuration of the secure cluster computation system 20. The secure cluster computation system 20 includes W (W is a predetermined integer equal to or greater than 3) secure cluster computation devices 200₁, ..., 200_{W}. The secure cluster computation devices 200₁, ..., 200_{W} are connected to the network 800 and can communicate with each other. The network 800 may be, for example, a communication network such as the Internet, a broadcasting channel, or the like. Fig. 11 is a block diagram illustrating a configuration of a secure cluster computation device 200ᵢ(1 ≤ i ≤ W) . Fig. 12 is a flowchart illustrating operation of the secure cluster computation system 20.

As illustrated in Fig. 11, the secure cluster computation device 200ᵢ includes a centroid table initialization unit 210ᵢ, a distance table computation unit 220ᵢ, a cluster ID table computation unit 230ᵢ, a centroid table computation unit 240ᵢ, an end condition determination unit 250ᵢ, and a recording unit 290ᵢ. Each component of the secure cluster computation device 200ᵢ except for the recording unit 290ᵢ is configured to be able to execute operation required for secure computation, that is, operation required for achieving the function of each component among at least concealment, addition, subtraction, multiplication, division, logical operation (NOT, logical product, logical sum, exclusive logical sum), comparison operation (=, <, >, ≤, ≥), secure sorting, secure unique check, Group-by operation, prefix_sum (prefix sum), and secure collective mapping. As a specific functional configuration for achieving each operation in the present invention, for example, a configuration capable of executing an existing algorithm including the algorithms disclosed in each of Reference Non Patent Literatures 1 to 7 is sufficient, and since these are conventional configurations, a detailed description thereof will be omitted. The recording unit 290ᵢ is a component that records information necessary for the processing of the secure cluster computation device 200ᵢ. For example, the recording unit 290ᵢ records a data table representing data to be clustered in advance.

Through cooperative calculation by the W secure cluster computation devices 200ᵢ, the secure cluster computation system 20 achieves secure computation of the k-means method and the k-means++ method that is a multi-party protocol. Therefore, the centroid table initialization means 210 (not illustrated) of the secure cluster computation system 20 is configured by the centroid table initialization units 210₁, ..., 210_{W}, the distance table computation means 220 (not illustrated) is configured by the distance table computation units 220₁, ..., 220_{W}, the cluster ID table computation means 230 (not illustrated) is configured by the cluster ID table computation units 230₁, ..., 230_{W}, the centroid table computation means 240 (not illustrated) is configured by the centroid table computation units 240₁, ..., 240_{W}, and the end condition determination means 250 (not illustrated) is configured by the end condition determination units 250₁, ..., 250_{W}.

The secure cluster computation system 20 sets M (M is an integer of 1 or more) as the number of data, K (K is an integer of 1 or more) as the number of clusters, N (N is an integer of 1 or more) as a dimension of data, (xᵢ₁, ..., x_{iN}) (i = 1, ..., M) as data of the data ID i, and calculates a share [[k(i)]] of a cluster ID k(i) (where k(i) satisfies 1 ≤ k(i) ≤ K) of a cluster to which the data of the data ID i belongs from shares ([[xᵢ₁]], ..., [[x_{iN}]]) (i = 1, ..., M) of M pieces of data (xᵢ₁, ..., x_{iN}). Here, it is assumed that a cluster ID table includes a data ID and a cluster ID of a cluster to which data of the data ID belongs as attributes (hereinafter, referred to as a data ID attribute and a cluster ID attribute), a data table includes a data ID and data of the data ID as attributes (hereinafter, referred to as a data ID attribute and a data attribute), a centroid table includes a cluster ID and a centroid of a cluster of the cluster ID as attributes (hereinafter, referred to as a cluster ID attribute and a centroid attribute), a distance table includes a data ID, a cluster ID, and a distance between data of the data ID and a centroid of a cluster of the cluster ID as attributes (hereinafter, referred to as a data ID attribute, a cluster ID attribute, and a distance attribute), and the data table includes a set of a share [[i]] of the data ID i and the share ([[xᵢ₁]], ..., [[x_{iN}]]) of the data (xᵢ₁, ..., x_{iN}) of the data ID i as the i-th record (i = 1, ..., M).

The operation of the secure cluster computation system 20 will be described with reference to Fig. 12.

In S210, the centroid table initialization means 210 sets a table including a set of a share [[j]] of a cluster ID j and a share ([[cⱼ₁]], ..., [[c_{jN}]]) of a centroid (cⱼ₁, ..., c_{jN}) of the cluster ID j (where the shares are computed by a predetermined method) as the j-th record (j = 1, ..., K) as an initial value of the centroid table. For example, the centroid table initialization means 210 randomly selects shares [[i₁]], ..., [[i_{K}]] of the data IDs from among the shares [[1]], ..., [[M]], and sets a set of the share [[j]] of the cluster ID j and the share ([[x_{i_j1}]], ..., [[x_{i_jN}]]) of the data (x_{i_j1}, ..., x_{i_jN}) of the data ID iⱼ as an initial value of the j-th record (j = 1, ..., K) of the centroid table.

In S220, using the data table and the centroid table, the distance table computation means 220 computes a distance table including a set of the share [[i]] of the data ID i, the share [[j]] of the cluster ID j, a share [[dᵢⱼ]] of a distance dᵢⱼ between the data (xᵢ₁, ..., x_{iN}) of the data ID i and the centroid (cⱼ₁, ..., c_{jN}) of the cluster ID j as an M(j-1)+i-th record (i = 1, ..., M, j = 1, ..., K). The centroid table computed in S210 is used at the time of the first execution of S220, and the centroid table computed in S240 is used at the time of the second and subsequent executions.

In S230, the cluster ID table computation means 230 computes a cluster ID table including a set of the share [[i]] of the data ID i and the share [[k(i)]] of the cluster ID k(i) of the cluster to which the data of the data ID i belongs as the i-th record (i = 1, ..., M) using the distance table. For example, the cluster ID table computation means 230 computes a first intermediate table by performing secure sorting on the distance table by using the distance attribute of the distance table as a key, using the distance table, computes a second intermediate table by adding a column obtained by performing secure unique check on an element column of the data ID attribute of the first intermediate table to the first intermediate table as a checked data ID attribute, using the first intermediate table, computes a third intermediate table including a record in which a value of an element of the checked data ID attribute of the second intermediate table is [[1]], using the second intermediate table, and computes a cluster ID table by respectively using, as an element column of the data ID attribute and an element column of the cluster ID attribute of the cluster ID table, an element column of the data ID attribute and an element column of the cluster ID attribute of a table obtained by performing secure sorting on the third intermediate table by using the data ID attribute of the third intermediate table as a key, using the third intermediate table. Here, the first intermediate table is a table including the data ID attribute, the cluster ID attribute, and the distance attribute, the second intermediate table is a table including the checked data ID attribute, the data ID attribute, the cluster ID attribute, and the distance attribute, and the third intermediate table is a table including the checked data ID attribute, the data ID attribute, the cluster ID attribute, and the distance attribute. The first intermediate table includes MK records, the second intermediate table includes MK records, and the third intermediate table includes M records.

In S240, the centroid table computation means 240 computes the centroid table using the data table and the cluster ID table. For example, the centroid table computation means 240 computes a fifth intermediate table by replacing the element column of the data ID attribute of the data table with the element of the cluster ID attribute of the cluster ID table, using the data table and the cluster ID table, computes a sixth intermediate table by a groupBySum operation using the data ID attribute of the fifth intermediate table as a key, using the fifth intermediate table, computes a seventh intermediate table by a groupByCount operation using the data ID attribute of the fifth intermediate table as a key, using the fifth intermediate table, and computes a centroid table by setting a value obtained by dividing the value of the element of the data attribute of the j-th record of the sixth intermediate table by the value of the element of the data attribute of the j-th record of the seventh intermediate table as a value of an element of the centroid attribute of the j-th record of the centroid table, using the sixth intermediate table and the seventh intermediate table. Here, the fifth intermediate table is a table including the data ID attribute and the data attribute, the sixth intermediate table is a table including the data ID attribute and the data attribute, and the seventh intermediate table is a table including the data ID attribute and the data attribute. The fifth intermediate table includes M records, the sixth intermediate table includes K records, and the seventh intermediate table includes K records.

In S250, the end condition determination means 250 ends the process in a case where a predetermined end condition is satisfied, and returns to the processing of S220 in other cases. That is, the secure cluster computation system 20 repeats the processing of S220 to S240. When the predetermined end condition is the number of executions of the processing of S220 to S240, it is assumed that the share [[T]] of the number of executions T is given in advance, and the centroid table initialization means 210 initializes the value of the counter t with the share [[0]]. Then, the end condition determination means 250 may update the value of the counter t with t + [[1]], and in a case where the value of =([[t > T]], [[1]]) is [[1]], the process may be ended, and in other cases, the process may return to the processing of S220.

### <<Setting of Initial Value Using Secure k-means++ Method>>

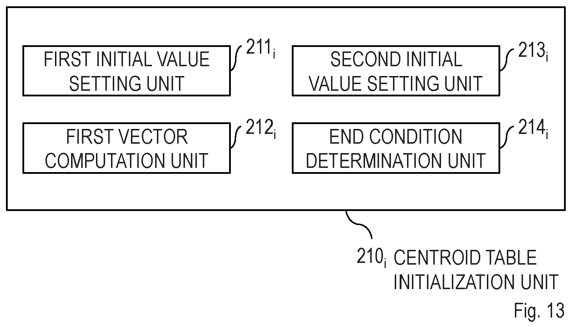

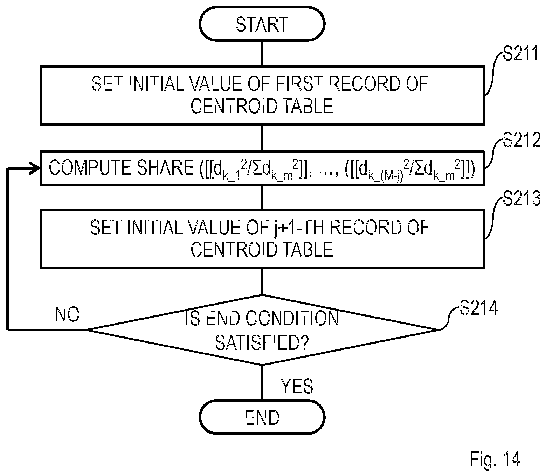

Hereinafter, the centroid table initialization means 210 will be described with reference to Figs. 13 and 14. Fig. 13 is a block diagram illustrating a configuration of the centroid table initialization unit 210ᵢ (1 ≤ i ≤ W). Fig. 14 is a flowchart illustrating operation of the centroid table initialization means 210. As illustrated in Fig. 13, the centroid table initialization unit 210ᵢ includes a first initial value setting unit 211ᵢ, a first vector computation unit 212ᵢ, a second initial value setting unit 213ᵢ, and an end condition determination unit 214ᵢ.

The first initial value setting means 211 (not illustrated) of the centroid table initialization means 210 is configured by the first initial value setting units 211₁, ..., and 211_{W}, the first vector computation means 212 (not illustrated) is configured by the first vector computation units 212₁, ..., 212_{W}, the second initial value setting means 213 (not illustrated) is configured by the second initial value setting units 213₁, ..., 213_{W}, and the end condition determination means 214 (not illustrated) is configured by the end condition determination units 214₁, ..., 214_{W}.

Hereinafter, the operation of the centroid table initialization means 210 will be described with reference to Fig. 14.

In S211, the first initial value setting means 211 randomly selects a share [[i₁]] of a data ID from among shares [[1]], ..., [[M]], and sets a set of the share [[1]] of the cluster ID 1 and the share ([[x_{i_11}]], ..., [[x_{i_1N}]]) of the data (x_{i_11}, ..., x_{i_1N}) of the data ID i₁ as an initial value of the first record of the centroid table. The first initial value setting means 211 initializes the value of the counter t with the share [[0]].

In S212, the first vector computation means 212 computes a share ([[d_{k_1}²/Σd_{k_m}²]], ..., [[d_{k_(M-j)}²/Σd_{k_m}²]]) of a vector (d_{k_1}²/Σd_{k_m}², ..., d_{k_(M-j)}²/Σd_{k_m}²) (where d_{k_m} is the smallest distance from a distance between the centroid specified by the first record of the centroid table and the data of the data ID kₘ to a distance between the centroid specified by the j-th record of the centroid table and the data of the data ID kₘ), using a share ([[x_{k_11}]], ..., [[x_{k_(M-j)N}]]) of data (x_{k_11}, ..., x_{k_(M-j)N}) (where kₘ (m = 1, ..., M-j, j satisfies 1 ≤ j < K) is a data ID of data that is not selected as the centroid) of the data ID kₘ. For example, the first vector computation means 212 may perform processing similar to the processing of S220 and S230 to compute the share ([[d_{k_1}²/Σd_{k_m}²]], ..., [[d_{k_(M-j)}²/Σd_{k_m}²]]).

In S213, using the secure random number computation system of the first embodiment, the second initial value setting means 213 computes a share [[iⱼ₊₁]] of one output value iⱼ₊₁ (iⱼ₊₁ is equal to one of the data IDs k₁, ..., k_{M-j} of the data not selected as the centroid) from the share ([[k₁]], ..., [[k_{M-j}]]) of the vector (k₁, ..., k_{M-j}) having a data ID of data not selected as the centroid as an element and the share ([[d_{k_1}²/Σd_{k_m}²]], ... , [[d_{k_(M-j)}²/Σd_{k_m}²]] ) of the vector (d_{k_1}²/Σd_{k_m}², ..., d_{k_(M-j)}²/Σd_{k_m}²) computed in S212, and sets a set of the share [[j+1]] of the cluster ID j+1 and the share ([[x_{i_(j+1)1}]], ..., [[x_{i_(j+1)N}]]) of the data (x_{i_(j+1)1}, ..., x_{i_(j+1)N}) of the data ID iⱼ₊₁ as an initial value of the j+1-th record of the centroid table.

In S214, the end condition determination means 214 may update the value of the counter t with t + [[1]], and in a case where the value of =([[t > K]], [[1]]) is [[1]], the process ends, and in other cases, the process returns to the processing of S212. That is, the centroid table initialization means 210 repeats the processing of S212 to S213.

According to the embodiment of the present invention, it is possible to perform secure computation of the k-means method and the k-means++ method with high accuracy while keeping data secure.

### <Supplement>

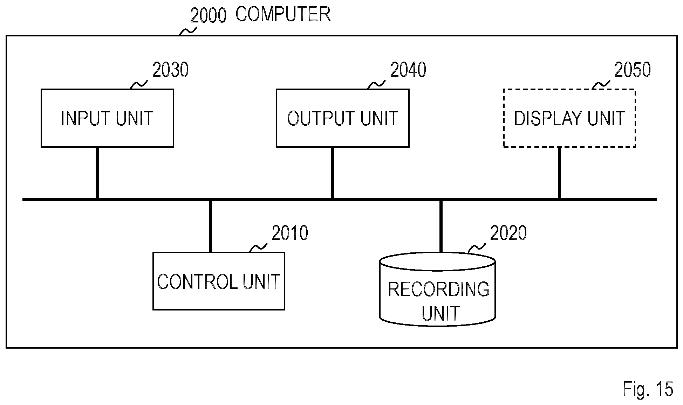

Fig. 15 is a diagram illustrating an example of a functional configuration of a computer that implements each device described above. It is possible to perform the processes in the respective devices described above, by causing a recording unit 2020 to read a program for causing a computer to function as the respective devices described above and causing a control unit 2010, an input unit 2030, an output unit 2040, and the like to operate.

The device according to the present invention includes, as a single hardware entity for example, an input unit that can be connected to a keyboard or the like, an output unit that can be connected to a liquid crystal display or the like, a communication unit that can be connected to a communication device (e.g., a communication cable) capable of communicating with the outside of the hardware entity, a CPU (Central Processing Unit, which may include a cache memory or a register), a RAM or a ROM which is a memory, an external storage device as a hard disk, and a bus that connects the input unit, the output unit, the communication unit, the CPU, the RAM, the ROM, and the external storage device so that data can be exchanged therebetween. A device (drive) or the like that can write and read data in and from a recording medium such as a CD-ROM may be provided in the hardware entity as necessary. Examples of a physical entity including such a hardware resource include a general-purpose computer.

The external storage device of the hardware entity stores a program required to implement the above-described functions, data required to process the program, and the like (the present invention is not limited to the external storage device and the program may be stored, for example, in a ROM which is a read-only storage device). Data or the like obtained by processing the program is appropriately stored in a RAM, an external storage device, or the like.

In the hardware entity, each program stored in the external storage device (or ROM or the like) and data required to process each program are read to a memory as necessary and are appropriately interpreted and processed by the CPU. As a result, the CPU implements a predetermined function (each component represented as ... unit, ... means, or the like).

The present invention is not limited to the above-described embodiment and can be appropriately modified. The processes described in the foregoing embodiment may be executed not only chronologically in accordance with the described order, but also in parallel or individually in accordance with the processing capability of a device that executes the processes or as necessary.

As described above, when the processing function of the hardware entity (the device according to the present invention) described in the foregoing embodiment is implemented by a computer, processing content of the function of the hardware entity is described by a program. In addition, as the computer executes the program, the processing function of the hardware entity is implemented on the computer.

The program in which the processing content is written may be recorded on a computer-readable recording medium. The computer-readable recording medium may be, for example, any recording medium such as a magnetic recording device, an optical disc, a magneto-optical recording medium, or a semiconductor memory. Specifically, for example, a hard disk device, a flexible disk, a magnetic tape, or the like, can be used as a magnetic recording device, a DVD (Digital Versatile Disc), a DVD-RAM (Random Access Memory), a CD-ROM (Compact Disc Read Only Memory), a CD-R (Recordable)/RW (ReWritable), or the like, can be used as an optical disk, an MO (Magneto-Optical disc), or the like, can be used as a magneto-optical recording medium, an EEP-ROM (Electronically Erasable and Programmable-Read Only Memory), or the like, can be used as a semiconductor memory.

In addition, the program is distributed by, for example, selling, transferring, or renting a portable recording medium such as a DVD or a CD-ROM on which the program is recorded. Further, a configuration may also be employed in which the program is stored in a storage device of a server computer and the program is distributed by transferring the program from the server computer to other computers via a network.

For example, a computer that executes such a program first temporarily stores a program recorded on a portable recording medium or a program transferred from the server computer in a storage device of the computer. In addition, to perform the processing, the computer reads the program stored in the storage device of the computer, and executes the processing in accordance with the read program. Also, in other modes of execution of the program, the computer may read the program directly from a portable recording medium and performs processing in accordance with the program, or alternatively, the computer may sequentially perform processing in accordance with a received program every time a program is transferred from the server computer to the computer. In addition, the above-described processing may be executed by a so-called ASP (Application Service Provider) type service that implements a processing function only by an execution instruction and result acquisition without transferring the program from the server computer to the computer. Note that the program in the present embodiment includes information that is used for processing by an electronic computer and is equivalent to the program (data or the like that is not a direct command to the computer but has property that defines processing performed by the computer).

Although the hardware entity is configured by causing a computer to execute a predetermined program in the present embodiment, at least some of the processing content may be implemented by hardware.

## Claims

1. A secure random number computation system having L and S being integers of 1 or more, including three or more secure random number computation devices, and configured to compute a share ([[r₁]] , ..., [[rₛ]]) of a vector (r₁, ... , rₛ), where rᵢ, with i = 1, ..., S, is equal to one of output possibility values x₁, ..., x_{L}, having an output value as an element, from a share ([[x₁]], ..., [[x_{L}]]) of a vector (x₁, ..., x_{L}) having an output possibility value as an element and a share ([[p₁]], ..., [[p_{L}]) of a vector (p₁, ..., p_{L}), where pᵢ, with i = 1, ..., L, is a probability that the output possibility value xᵢ is output, and satisfies Σpᵢ = 1, having an output probability as an element, wherein [[x]], referred to as a share of x, is a value obtained by concealing x by secure distribution,
the secure random number computation system comprising:
first vector computation means (110) that computes a share ([[p'₁]], ..., [[p'_{L}]]) of a vector (p'₁, ..., P'_{L}) from the share ([[p₁]], ..., [[p_{L}]]) of the vector (p₁, ..., p_{L}) by ([[p'₁]], ..., [[p'_{L}]]) = prefix_sum (([[p₁]], ..., [[p_{L}]]), wherein the prefix_sum uses the share [[^{→}x]] of the N-dimensional vector ^{→}x = (x₁, ..., x_{N}) as an input, and outputs the share [[^{→}y]] = ([[y₁]], ..., [y_{N}]), where yᵢ = Σⱼ₌₁ⁱxⱼ, of the N-dimensional vector ^{→}y;
uniform random number generation means (120) that generates a share ([[q₁]], ..., [[qₛ]]) of a vector (q₁, ..., qₛ), where qᵢ, with i = 1, ..., S, is a uniform random number, and satisfies 0 ≤ qᵢ ≤ 1, having a uniform random number as an element; and
random number computation means (130) that computes a share ([[r₁]], ..., [[rₛ]]) of a vector (r₁, ..., rₛ) having an output value as an element from the share ([[p'₁]], ..., [[p'_{L}]]) of the vector (p'₁, ..., p'_{L}), the share ([[x₁]], ..., [[x_{L}]]) of the vector (x₁, ..., x_{L}), and the share ([[q₁]], ..., [[qₛ]]) of the vector (q₁, ..., qₛ) by ([[r₁], ..., [[rₛ]]) = map(([[p'₁], ..., [[p'_{L}]]), ([[x₁]], ..., [[x_{L}]]), ([[q₁], ..., [[qₛ]])), wherein [[^{→}y]] = map([[^{→}a], [[^{→}b]], [[^{→}x]]) is a secure collective mapping that uses the share [[^{→}a]] = ([[a₁]], ..., [[a_{K}]]) of the vector ^{→}a = (a₁, ..., a_{K}), the share [[^{→}b]] = ([[b₁]], ..., [[b_{K}]]) of the vector ^{→}b = (b₁, ..., b_{K}), where a₁, ..., a_{K}, b₁, ..., b_{K} are real numbers, and satisfy a₁ < ... < a_{K}, and the share [^{→}x] = ([[x₁]], ..., [[x_{N}]]) of the vector ^{→}x = (x₁, ..., x_{N}) as inputs, and outputs [[^{→}y]]: = ([[y₁]], ..., [y_{N}]) such that aₚ ≤ xₙ < aₚ₊₁ and yₙ = bₚ are satisfied for 1 ≤ n ≤ N.

2. A secure random number computation device included in the secure random number computation system according to claim 1,
the secure random number computation device comprising:
a first vector computation unit (110) that computes a share ([[p'₁]], ..., [[p'_{L}]]) of a vector (p'₁, ..., p'_{L}) from the share ([[p₁]] , ... , [[p_{L}]]) of the vector (p₁, ..., p_{L}) by ([[p'₁]], ..., [[p'_{L}]]) = prefix_sum(([[p₁]], ..., [[p_{L}]]));
a uniform random number generation unit (120) that generates a share ([[q₁]], ... , [[qₛ]]) of a vector (q₁, ..., qₛ), where qᵢ, with i = 1, ..., S, is a uniform random number, and satisfies 0 ≤ qᵢ ≤ 1, having a uniform random number as an element; and
a random number computation unit (130) that computes a share ([[r₁]], ..., [[rₛ]]) of a vector (r₁, ..., rₛ) having an output value as an element from the share ([[p'₁], ..., [[p'_{L}]]) of the vector (p'₁, ..., p'_{L}), the share ([[x₁]], ..., [[x_{L}]]) of the vector (x₁, ..., x_{L}), and the share ([[q₁]], ..., [[qₛ]]) of the vector (q₁, ..., qₛ) by ([[r₁], ..., [[rₛ]]) = map(([[p'₁]], ..., [[p'_{L}]]), ([[x₁]], ..., [[x_{L}]]), ([[q₁], ..., [[qₛ]])).

3. A secure random number computation method, performed by a secure random number computation system including three or more secure random number computation devices, of computing a share ([[r₁]], ... , [[rₛ]]) of a vector (r₁, ..., rₛ), where rᵢ, with i = 1, ..., S, is equal to one of output possibility values x₁, ..., x_{L}, having an output value as an element, from a share ([[x₁]] , ... , [[x_{L}]]) of a vector (x₁, ..., x_{L}) having an output possibility value as an element and a share ([[p₁]], ..., [[p_{L}]]) of a vector (p₁, ..., p_{L}), where pᵢ, with i = 1, ..., L, is a probability that the output possibility value xᵢ is output, and satisfies Σpᵢ = 1, having an output probability as an element, wherein [[x]], referred to as a share of x, is a value obtained by concealing x by secure distribution,
the secure random number computation method comprising:
a first vector computation step (S110) of computing a share ([[p'₁]], ..., [[p'_{L}]]) of a vector (p'₁, ..., p'_{L}) from the share ([[p₁]], ... , [[p_{L}]]) of the vector (p₁, ..., p_{L}) by ([[p'₁]], ..., [[p'_{L}]]) = prefix_sum(([[p₁]], ..., [[p_{L}]])), by the secure random number computation system, wherein the prefix_sum uses the share [[^{→}x]] of the N-dimensional vector ^{→}x = (x₁, ..., x_{N}) as an input, and outputs the share [[^{→}y]] = ([[y₁]], ..., [y_{N}]), where yᵢ = Σⱼ₌₁ⁱxⱼ, of the N-dimensional vector ^{→}y;
a uniform random number generation step (S120) of generating a share ([[q₁]], ... , [[qₛ]]) of a vector (q₁, ..., qₛ), where qᵢ, with i = 1, ..., S, is a uniform random number, and satisfies 0 ≤ qᵢ ≤ 1, having a uniform random number as an element, by the secure random number computation system; and
a random number computation step (S130) of computing a share ([[r₁]], ..., [[rₛ]]) of a vector (r₁, ..., rₛ) having an output value as an element from the share ([[p'₁], ..., [[p'_{L}]]) of the vector (p'₁, ..., p'_{L}), the share ([[x₁]], ..., [[x_{L}]]) of the vector (x₁, ..., x_{L}), and the share ([[q₁]], ..., [[qₛ]]) of the vector (q₁, ..., qₛ) by ([[r₁], ..., [[rₛ]]) = map (([[p'₁]], ..., [[p'_{L}]]), ([[x₁]], ..., [[x_{L}]]), ([[q₁], ..., [[qₛ]])), by the secure random number computation system, wherein [[^{→}y]] = map([[^{→}a], [[^{→}b]], [[^{→}x]]) is a secure collective mapping that uses the share [[^{→}a]] = ([[a₁]], ..., [[a_{K}]]) of the vector ^{→}a = (a₁, ..., a_{K}), the share [[^{→}b]] = ([[b₁]], ..., [[b_{K}]]) of the vector ^{→}b = (b₁, ..., b_{K}), where a₁, ..., a_{K}, b₁, ..., b_{K} are real numbers, and satisfy a₁ < ... < a_{K}, and the share [^{→}x] = ([[x₁]], ... , [[x_{N}]]) of the vector ^{→}x = (x₁, ..., x_{N}) as inputs, and outputs [[^{→}y]] : = ([[y₁]], ..., [y_{N}]) such that aₚ ≤ xₙ < aₚ₊₁ and yₙ = bₚ are satisfied for 1 ≤ n ≤ N.

4. A secure cluster computation system having M, where M is an integer of 1 or more, as the number of data, K, where K is an integer of 1 or more, as the number of clusters, N, where N is an integer of 1 or more, as a dimension of data, and (xᵢ₁, ..., x_{iN}), with i = 1, ..., M, as data of data ID i,
including three or more secure cluster computation devices, and configured to compute a share [[k(i)]] of a cluster ID k(i), where k(i) satisfies 1 ≤ k(i) ≤ K, of a cluster to which the data of the data ID i belongs from shares ([[xᵢ₁]], ..., [[x_{iN}]]), with i = 1, ..., M, of M pieces of data (xᵢ₁, ..., x_{iN}), wherein [[x]], referred to as a share of x, is a value obtained by concealing x by secure distribution,
wherein a table that includes a data ID and a cluster ID of a cluster to which data of the data ID belongs as attributes, hereinafter, referred to as a data ID attribute and a cluster ID attribute, is set as a cluster ID table, a table that includes a data ID and data of the data ID as attributes, hereinafter, referred to as a data ID attribute and a data attribute, is set as a data table, a table that includes a cluster ID and a centroid of a cluster of the cluster ID as attributes, hereinafter, referred to as a cluster ID attribute and a centroid attribute, is set as a centroid table, and a table that includes a data ID, a cluster ID, and a distance between data of the data ID and a centroid of a cluster of the cluster ID as attributes, hereinafter, referred to as a data ID attribute, a cluster ID attribute, and a distance attribute, is set as a distance table,
the data table includes a set of a share [[i]] of the data ID i and the share ([[xi₁]], ..., [[x_{iN}]]) of the data (xᵢ₁, ..., x_{iN}) of the data ID i as an i-th record, with i = 1, ..., M,
the secure cluster computation system comprises:
centroid table initialization means (210) that sets a table including a set of a share [[j]] of a cluster ID j and a share ([[cⱼ₁]], ... , [[c_{jN}]]) of a centroid (cⱼ₁, ..., c_{jN}) of the cluster ID j, where the shares are computed by a predetermined method, as a j-th record, with j = 1, ..., K, as an initial value of the centroid table;
distance table computation means (220) that uses the data table and the centroid table to compute a distance table including a set of the share [[i]] of the data ID i, the share [[j]] of the cluster ID j, a share [[dᵢⱼ]] of a distance dᵢⱼ between the data (xᵢ₁, ..., x_{iN}) of the data ID i and the centroid (cⱼ₁, ..., c_{jN}) of the cluster ID j as an M(j-1)+i-th record, with i = 1, ..., M, and j = 1, ..., K;
cluster ID table computation means (230) that computes a cluster ID table including a set of the share [[i]] of the data ID i and the share [[k(i)]] of the cluster ID k(i) of the cluster to which the data of the data ID i belongs as the i-th record, with i = 1, ..., M, using the distance table; and
centroid table computation means (240) that computes the centroid table using the data table and the cluster ID table, and
the centroid table initialization means (210) includes
first initial value setting means (211) that randomly selects a share [[i₁]] of a data ID from among shares [[1]], ..., [[M]], and sets a set of the share [[1]] of the cluster ID 1 and the share ( [ [x_{i_11}]], ... , [[xᵢ__{1N}]]) of the data (x_{i_11}, ..., x_{i_1N}) of the data ID i₁ as an initial value of a first record of the centroid table,
first vector computation means (212) that computes a share ([[d_{k_1}²/Σd_{k_m}²]], ..., [[d_{k_(M-j)}²/Σd_{k_m}²]]) of a vector (d_{k_1}²/Σd_{k_m}², ..., d_{k_(M-j)}²/Σd_{k_m}²), where d_{k_m} is the smallest distance from a distance between the centroid specified by the first record of the centroid table and the data of the data ID kₘ to a distance between the centroid specified by the j-th record of the centroid table and the data of the data ID kₘ, using a share ([[x_{k_11}]], ..., [[x_{k_(M-j)N}]]) of data (x_{k_11}, ..., x_{k_(M-j)N}), where kₘ, with m = 1, ..., M-j, where j satisfies 1 ≤ j < K, is a data ID of data that is not selected as the centroid, of the data ID kₘ, and
second initial value setting means (213) that uses the secure random number computation system according to claim 1 to compute a share [[iⱼ₊₁]] of one output value iⱼ₊₁, where iⱼ₊₁ is equal to one of the data IDs k₁, ..., k_{M-j} of data not selected as the centroid, from the share ([[k₁]], ..., [[k_{M-j}]]) of the vector (k₁, ..., k_{M-j}) having a data ID of data not selected as the centroid as an element and the share ([[d_{k_1}²/Σd_{k_m}²]] , ..., [[d_{k_(M-i)}²/Σd_{k_m}²]]) of the vector (d_{k_1}²/Σd_{k_m}², . . . , d_{k_(M-j)}²/_{Σ}d_{k_m}²), and sets a set of the share [[j+1]] of the cluster ID j+1 and the share ([[x_{i_(j+1)1}]], ..., [[x_{i_(j+1)N}]]) of the data (x_{i_(j+1)1}, ..., x_{i_(j+1)N}) of the data ID iⱼ₊₁ as an initial value of a j+1-th record of the centroid table.

5. A secure cluster computation device included in the secure cluster computation system according to claim 4,
the secure cluster computation device comprises:
a centroid table initialization unit (210) that sets a table including a set of a share [[j]] of a cluster ID j and a share ([[cⱼ₁]], ... , [[c_{jN}]]) of a centroid (cⱼ₁, ..., c_{jN}) of the cluster ID j, where the shares are computed by a predetermined method, as a j-th record, with j = 1, ..., K, as an initial value of the centroid table;
a distance table computation unit (220) that uses the data table and the centroid table to compute a distance table including a set of the share [[i]] of the data ID i, the share [[j]] of the cluster ID j, a share [[dᵢⱼ]] of a distance dᵢⱼ between the data (xᵢ₁, ..., x_{iN}) of the data ID i and the centroid (cⱼ₁, ..., c_{jN}) of the cluster ID j as an M(j-1)+i-th record, with i = 1, ..., M, and j = 1, ..., K;
a cluster ID table computation unit (230) that computes a cluster ID table including a set of the share [[i]] of the data ID i and the share [[k(i)]] of the cluster ID k(i) of the cluster to which the data of the data ID i belongs as the i-th record, with i = 1, ..., M, using the distance table; and
a centroid table computation unit (240) that computes the centroid table using the data table and the cluster ID table, and
the centroid table initialization unit (210) includes
a first initial value setting unit (211) that randomly selects a share [[i₁]] of a data ID from among shares [[1]], ..., [[M]], and sets a set of the share [[1]] of the cluster ID 1 and the share ( [ [x_{i_11}]], ..., [[xᵢ__{1N}]]) of the data (x_{i_11}, ..., x_{i_1N}) of the data ID i₁ as an initial value of a first record of the centroid table,
a first vector computation unit (212) that computes a share ([[d_{k_1}²/Σd_{k_m}²]] , ..., [[d_{k_(M-j)}²/Σd_{k_m}²]]) of a vector (d_{k_1}²/Σd_{k_m}², ..., d_{k_(M-j)}²/Σd_{k_m}²), where d_{k_m} is the smallest distance from a distance between the centroid specified by the first record of the centroid table and the data of the data ID kₘ to a distance between the centroid specified by the j-th record of the centroid table and the data of the data ID kₘ, using a share ([[x_{k_11}]], ..., [[x_{k_(M-j)N}]]) of data (x_{k_11}, ..., x_{k_(M-j)N}), where kₘ, with m = 1, ..., M-j, where j satisfies 1 ≤ j < K, is a data ID of data that is not selected as the centroid, of the data ID kₘ, and
a second initial value setting unit (213) that uses the secure random number computation device according to claim 2 to compute a share [[iⱼ₊₁]] of one output value iⱼ₊₁, where iⱼ₊₁ is equal to one of the data IDs k₁, ..., k_{M-j} of the data not selected as the centroid, from the share ( [ [k₁]] , ..., [[k_{M-j}]]) of the vector (k₁, ..., k_{M-j}) having a data ID of data not selected as the centroid as an element and the share ([[d_{k_1}²/Σd_{k_m}²]], ..., [[d_{k_(M-j)}²/Σd_{k_m}²]]) of the vector (d_{k_1}²/Σd_{k_m}², . . . , d_{k_(M-j)}²/Σd_{k_m}²), and sets a set of the share [[j+1]] of the cluster ID j+1 and the share ([[x_{i_(j+1)1}]], ..., [[x_{i_(j+1)N}]]) of the data (x_{i_(j+1)1}, ..., x_{i_(j+1)N}) of the data ID iⱼ₊₁ as an initial value of a j+1-th record of the centroid table.

6. A secure cluster computation method, performed by a secure cluster computation system having M, where M is an integer of 1 or more, as the number of data, K, where K is an integer of 1 or more, as the number of clusters, N, where N is an integer of 1 or more, as a dimension of data, and (xᵢ₁, ..., x_{iN}), with i = 1, ..., M, as data of a data ID i, and including three or more secure cluster computation devices, of computing a share [[k(i)]] of a cluster ID k(i), where k(i) satisfies 1 ≤ k(i) ≤ K, of a cluster to which the data of the data ID i belongs from shares ([[xᵢ₁]], ..., [[x_{iN}]]), with i = 1, ..., M, of M pieces of data (xᵢ₁, ... , x_{iN}), wherein [[x]], referred to as a share of x, is a value obtained by concealing x by secure distribution,
wherein a table that includes a data ID and a cluster ID of a cluster to which data of the data ID belongs as attributes, hereinafter, referred to as a data ID attribute and a cluster ID attribute, is set as a cluster ID table, a table that includes a data ID and data of the data ID as attributes, hereinafter, referred to as a data ID attribute and a data attribute, is set as a data table, a table that includes a cluster ID and a centroid of a cluster of the cluster ID as attributes, hereinafter, referred to as a cluster ID attribute and a centroid attribute, is set as a centroid table, and a table that includes a data ID, a cluster ID, and a distance between data of the data ID and a centroid of a cluster of the cluster ID as attributes, hereinafter, referred to as a data ID attribute, a cluster ID attribute, and a distance attribute, is set as a distance table,
the data table includes a set of a share [[i]] of the data ID i and the share ([[xᵢ₁]], ..., [[x_{iN}]]) of the data (xᵢ₁, ..., x_{iN}) of the data ID i as an i-th record, with i = 1, ..., M,
the secure cluster computation method comprises:
a centroid table initialization step (S210) of setting a table including a set of a share [[j]] of a cluster ID j and a share ([[cⱼ₁]], ..., [[c_{jN}]]) of a centroid (cⱼ₁, ..., c_{jN}) of the cluster ID j, where the shares are computed by a predetermined method, as a j-th record, with j = 1, ..., K, as an initial value of the centroid table, by the secure cluster computation system;
a distance table computation step (S220) of using the data table and the centroid table to compute a distance table including a set of the share [[i]] of the data ID i, the share [[j]] of the cluster ID j, a share [[dᵢⱼ]] of a distance dᵢⱼ between the data (xᵢ₁, ..., x_{iN}) of the data ID i and the centroid (cⱼ₁, ..., c_{jN}) of the cluster ID j as an M(j-1)+i-th record, with i = 1, ..., M, and j = 1, ..., K, by the secure cluster computation system;
a cluster ID table computation step (S230) of computing a cluster ID table including a set of the share [[i]] of the data ID i and the share [[k(i)]] of the cluster ID k(i) of the cluster to which the data of the data ID i belongs as the i-th record, with i = 1, ..., M, using the distance table, by the secure cluster computation system; and
a centroid table computation step (S240) of computing the centroid table using the data table and the cluster ID table, by the secure cluster computation system, and
the centroid table initialization step (S210) includes
a first initial value setting step (S211) of randomly selecting a share [[i₁]] of a data ID from among shares [[1]], ..., [[M]], and setting a set of the share [[1]] of the cluster ID 1 and the share ([[x_{i_11}]], ..., [[x_{i_1N}]]) of the data (x_{i_11}, ..., x_{i_1N}) of the data ID i₁ as an initial value of a first record of the centroid table,
a first vector computation step (S212) of computing a share ([[d_{k_1}²/Σd_{k_m}²]], ..., [[d_{k_(M-j)}²/Σd_{k_m}²]]) of a vector (d_{k_1}²/Σd_{k_m}², ..., d_{k_(M-j)}²/Σd_{k_m}²), where d_{k_m} is the smallest distance from a distance between the centroid specified by the first record of the centroid table and the data of the data ID kₘ to a distance between the centroid specified by the j-th record of the centroid table and the data of the data ID kₘ, using a share ( [ [x_{k_11}]], ..., [[x_{k_(M-j)N}]]) of data (x_{k_11}, ..., x_{k_(M-j)N}), where kₘ, with m = 1, ..., M-j, where j satisfies 1 ≤ j < K, is a data ID of data that is not selected as the centroid, of the data ID kₘ, and
a second initial value setting step (S213) of using the secure random number computation method according to claim 3 to compute a share [[iⱼ₊₁]] of one output value iⱼ₊₁, where iⱼ₊₁ is equal to one of the data IDs k₁, ..., k_{M-j} of data not selected as the centroid, from the share ([[k₁]] , ..., [[k]]) of the vector (k₁, ..., k_{M-j}) having a data ID of data not selected as the centroid as an element and the share ([[d_{k_1}²/Σd_{k_m}²]] , ..., [[d_{k_(M-}j)²/Σd_{k_m}²]]) of the vector (d_{k_1}²/Σd_{k_m}², ... , d_{k_(M-j)}²/Σd_{k_m}²), and setting a set of the share [[j+1]] of the cluster ID j+1 and the share ([[x_{i_(j+1)1}]], ..., [[x_{i_(j,1)N}]]) of the data (x_{i_(j+1)1}, ..., x_{i_(j+1)N}) of the data ID iⱼ₊₁ as an initial value of a j+1-th record of the centroid table.

7. A program for causing a computer to function as the secure random number computation device according to claim 2.

8. A program for causing a computer to function as the secure cluster computation device according to claim 5.

## Patentansprüche

1. System für sichere Zufallszahlberechnung mit L und S, die ganze Zahlen von 1 oder mehr sind, das drei oder mehr Vorrichtungen für sichere Zufallszahlberechnung enthält, und dazu konfiguriert ist, einen Anteil ([[r₁]], ..., [[r_{S}]]) eines Vektors (r₁, ..., r_{S}) zu berechnen, wobei rᵢ, mit i = 1, ..., S, gleich einem von Ausgabemöglichkeitswerten x₁, ..., x_{L} ist, mit einem Ausgabewert als ein Element, aus einem Anteil ([[x₁]], ..., [[x_{L}]]) eines Vektors (x₁, ..., x_{L}) mit einem Ausgabemöglichkeitswert als ein Element und einem Anteil ([[p₁]], ..., [[p_{L}]]) eines Vektors (p₁, ..., p_{L}), wobei pᵢ, mit i = 1, ..., L, eine Wahrscheinlichkeit ist, dass der Ausgabemöglichkeitswert xᵢ ausgegeben wird, und Σpᵢ = 1 erfüllt, mit einer Ausgabewahrscheinlichkeit als ein Element, wobei [[x]], bezeichnet als ein Anteil von x, ein Wert ist, der durch Verbergen von x durch sichere Verteilung erhalten wird,
wobei das System für sichere Zufallszahlberechnung Folgendes aufweist:
ein erstes Vektorberechnungsmittel (110), das einen Anteil ([[p'₁]], ..., [[p'_{L}]]) eines Vektors (p'₁, ..., p'_{L}) aus dem Anteil ([[p₁]], ..., [[p_{L}]]) des Vektors (p₁, ..., p_{L}) durch ([[p'₁]], ..., [[p'_{L}]]) = prefix_sum(([[p₁]], ..., [[p_{L}]])) berechnet, wobei die prefix_sum den Anteil [[^{→}x]] des N-dimensionalen Vektors ^{→}x = (x₁, ..., x_{N}) als eine Eingabe verwendet und den Anteil [[^{→}y]] = ([[y₁]], ..., [y_{N}]), wobei yᵢ = Σⱼ = ₁ⁱxⱼ, des N-dimensionalen Vektors ^{→}y ausgibt;
ein Erzeugungsmittel (120) für eine einheitliche Zufallszahl, das einen Anteil ([[q₁]], ..., [[q_{S}]]) eines Vektors (q₁, ..., q_{S}) erzeugt, wobei qᵢ, mit i = 1, ..., S, eine einheitliche Zufallszahl ist und 0 ≤ qᵢ ≤ 1 erfüllt, mit einer einheitlichen Zufallszahl als ein Element; und
ein Zufallszahlberechnungsmittel (130), das einen Anteil ([[r₁]], ..., [[r_{S}]]) eines Vektors (r₁, ..., r_{S}) mit einem Ausgabewert als ein Element aus dem Anteil ([[p'₁]], ..., [[p'_{L}]]) des Vektors (p'₁, ..., p'_{L}), dem Anteil ([[x₁]], ..., [[x_{L}]]) des Vektors (x₁, ..., x_{L}) und dem Anteil ([[q₁]], ..., [[q_{S}]]) des Vektors (q₁, ..., q_{S}) durch ([[r₁]], ..., [[r_{S}]]) = map(([[p'₁]], ..., [[p'_{L}]]), ([[x₁]], ..., [[x_{L}]]), ([[q₁]], ..., [[q_{S}]])) berechnet, wobei [[→y]] = map([[→a], [[→b]], [[→x]]) eine sichere kollektive Abbildung ist, die den Anteil [[→a]] = ([[a₁]], ..., [[a_{K}]]) des Vektors →a = (a₁, ..., a_{K}), den Anteil [[→b]] = ([[b₁]], ..., [[b_{K}]]) des Vektors →b = (b₁, ..., b_{K}) verwendet, wobei a₁, ..., a_{K}, b₁, ..., b_{K} reelle Zahlen sind und a₁ < ... < a_{K} erfüllen, und den Anteil [→x] = ([[x₁]], ..., [[x_{N}]]) des Vektors →x = (x₁, ..., x_{N}) als Eingaben und [[→y]]: = ([[y₁]], ..., [y_{N}]) derart ausgibt, dass aₚ ≤ xₙ < aₚ₊₁ und yₙ = bₚ für 1 ≤ n ≤ N erfüllt sind.

2. Vorrichtung für sichere Zufallszahlberechnung, die in dem System für sichere Zufallszahlberechnung nach Anspruch 1 enthalten ist,
wobei die Vorrichtung für sichere Zufallszahlberechnung Folgendes aufweist:
eine erste Vektorberechnungseinheit (110), die einen Anteil ([[p'₁]], ..., [[p'_{L}]]) eines Vektors (p'₁, ..., p'_{L}) aus dem Anteil ([[p₁]], ..., [[p_{L}]]) des Vektors (p₁, ..., p_{L}) durch ([[p'₁]], ..., [[p'_{L}]]) = prefix_sum(([[p₁]], ..., [[p_{L}]])) berechnet;
eine Erzeugungseinheit (120) für eine einheitliche Zufallszahl, die einen Anteil ([[q₁]], ..., [[q_{S}]]) eines Vektors (q₁, ..., q_{S}) erzeugt, wobei qᵢ, mit i = 1, ..., S, eine einheitliche Zufallszahl ist und 0 ≤ qᵢ ≤ 1 erfüllt, mit einer einheitlichen Zufallszahl als ein Element; und
eine Zufallszahlberechnungseinheit (130), die einen Anteil ([[r₁]], ..., [[r_{S}]]) eines Vektors (r₁, ..., r_{S}) mit einem Ausgabewert als ein Element aus dem Anteil ([[p'₁]], ..., [[p'_{L}]]) des Vektors (p'₁, ..., p'_{L}), dem Anteil ([[x₁]], ..., [[x_{L}]]) des Vektors (x₁, ..., x_{L}) und dem Anteil ([[q₁]], ..., [[q_{S}]]) des Vektors (q₁, ..., q_{S}) durch ([[r₁]], ..., [[r_{S}]]) = map(([[p'₁]], ..., [[p'_{L}]]), ([[x₁]], ..., [[x_{L}]]), ([[q₁]], ..., [[q_{S}]])) berechnet.

3. Verfahren für sichere Zufallszahlberechnung, das durch ein System für sichere Zufallszahlberechnung durchgeführt wird, das drei oder mehr Vorrichtungen für sichere Zufallszahlberechnung enthält, zum Berechnen eines Anteils ([[r₁]], ..., [[r_{S}]]) eines Vektors (r₁, ..., r_{S}), wobei rᵢ, mit i = 1, ..., S, gleich einem von Ausgabemöglichkeitswerten x₁, ..., x_{L} ist, mit einem Ausgabewert als ein Element, aus einem Anteil ([[x₁]], ..., [[x_{L}]]) eines Vektors (x₁, ..., x_{L}) mit einem Ausgabemöglichkeitswert als ein Element und einem Anteil ([[p₁]], ..., [[p_{L}]]) eines Vektors (p₁, ..., p_{L}), wobei pᵢ, mit i = 1, ..., L, eine Wahrscheinlichkeit ist, dass der Ausgabemöglichkeitswert xᵢ ausgegeben wird, und Σpᵢ = 1 erfüllt, mit einer Ausgabewahrscheinlichkeit als ein Element, wobei [[x]], bezeichnet als ein Anteil von x, ein Wert ist, der durch Verbergen von x durch sichere Verteilung erhalten wird,
wobei das Verfahren für sichere Zufallszahlberechnung Folgendes aufweist:
einen ersten Vektorberechnungsschritt (S110) des Berechnens eines Anteils ([[p'₁]], ..., [[p'_{L}]]) eines Vektors (p'₁, ..., p'_{L}) aus dem Anteil ([[p₁]], ..., [[p_{L}]]) des Vektors (p₁, ..., p_{L}) durch ([[p'₁]], ..., [[p'_{L}]]) = prefix_sum(([[p₁]], ..., [[p_{L}]])) durch das System für sichere Zufallszahlberechnung, wobei die prefix_sum den Anteil [[^{→}x]] des N-dimensionalen Vektors ^{→}x = (x₁, ..., x_{N}) als eine Eingabe verwendet und den Anteil [[^{→}y]] = ([[y₁]], ..., [y_{N}]), wobei yᵢ = Σⱼ = ₁ⁱxⱼ, des N-dimensionalen Vektors ^{→}y ausgibt;
einen Erzeugungsschritt (S120) für eine einheitliche Zufallszahl zum Erzeugen eines Anteils ([[q₁]], ..., [[q_{S}]]) eines Vektors (q₁, ..., q_{S}), wobei qᵢ, mit i = 1, ..., S, eine einheitliche Zufallszahl ist und 0 ≤ qᵢ ≤ 1 erfüllt, mit einer einheitlichen Zufallszahl als ein Element, durch das System für sichere Zufallszahlberechnung; und
einen Zufallszahlberechnungsschritt (S130) des Berechnens eines Anteils ([[r₁]], ..., [[r_{S}]]) eines Vektors (r₁, ..., r_{S}) mit einem Ausgabewert als ein Element aus dem Anteil ([[p'₁]], ..., [[p'_{L}]]) des Vektors (p'₁, ..., p'_{L}), dem Anteil ([[x₁]], ..., [[x_{L}]]) des Vektors (x₁, ..., x_{L}) und dem Anteil ([[q₁]], ..., [[q_{S}]]) des Vektors (q₁, ..., q_{S}) durch ([[r₁]], ..., [[r_{S}]]) = map(([[p'₁]], ..., [[p'_{L}]]), ([[x₁]], ..., [[x_{L}]]), ([[q₁]], ..., [[q_{S}]])) durch das System für sichere Zufallszahlberechnung, wobei [[^{→}y]] = map([[^{→}a], [[^{→}b]], [[^{→}x]]) eine sichere kollektive Abbildung ist, die den Anteil [[^{→}a]] = ([[a₁]], ..., [[a_{K}]]) des Vektors ^{→}a = (a₁, ..., a_{K}), den Anteil [[^{→}b]] = ([[b₁]], ..., [[b_{K}]]) des Vektors ^{→}b = (b₁, ..., b_{K}) verwendet, wobei a₁, ..., a_{K}, b₁, ..., b_{K} reelle Zahlen sind und a₁ < ... < a_{K} erfüllen, und den Anteil [^{→}x] = ([[x₁]], ..., [[x_{N}]]) des Vektors ^{→}x = (x₁, ..., x_{N}) als Eingaben und Ausgaben [[^{→}y]]: = ([[y₁]], ..., [y_{N}]), so dass aₚ ≤ xₙ < aₚ₊₁ und yₙ = bₚ für 1 ≤ n ≤ N erfüllt sind.

4. System für sichere Clusterberechnung mit M, wobei M eine ganze Zahl von 1 oder mehr ist, als die Anzahl von Daten, K, wobei K eine ganze Zahl von 1 oder mehr ist, als die Anzahl von Clustern, N, wobei N eine ganze Zahl von 1 oder mehr ist, als eine Dimension von Daten, und (xᵢ₁, ..., x_{iN}), mit i = 1, ..., M, als Daten der Daten-ID i,
das drei oder mehr Vorrichtungen für sichere Clusterberechnung enthält und dazu konfiguriert ist, einen Anteil [[k(i)]] einer Cluster-ID k(i), wobei k(i) 1 ≤ k(i) ≤ K erfüllt, eines Clusters, zu dem die Daten der Daten-ID i gehören, aus Anteilen ([[xᵢ₁]], ..., [[x_{iN}]]), mit i = 1, ..., M, von M Datenelementen (xᵢ₁, ..., x_{iN}) zu berechnen, wobei [[x]], bezeichnet als ein Anteil von x, ein Wert ist, der durch Verbergen von x durch sichere Verteilung erhalten wird,
wobei eine Tabelle, die eine Daten-ID und eine Cluster-ID eines Clusters enthält, zu dem Daten der Daten-ID als Attribute gehören, im Folgenden als ein Daten-ID-Attribut und ein Cluster-ID-Attribut bezeichnet, als eine Cluster-ID-Tabelle festgelegt ist, eine Tabelle, die eine Daten-ID und Daten der Daten-ID als Attribute enthält, im Folgenden als ein Daten-ID-Attribut und ein Datenattribut bezeichnet, als eine Datentabelle festgelegt ist, eine Tabelle, die eine Cluster-ID und einen Schwerpunkt eines Clusters der Cluster-ID als Attribute enthält, im Folgenden als ein Cluster-ID-Attribut und ein Schwerpunktattribut bezeichnet, als eine Schwerpunkttabelle festgelegt ist, und eine Tabelle, die eine Daten-ID, eine Cluster-ID und einen Abstand zwischen Daten der Daten-ID und einem Schwerpunkt eines Clusters der Cluster-ID als Attribute enthält, im Folgenden als ein Daten-ID-Attribut, ein Cluster-ID-Attribut und ein Abstandsattribut bezeichnet, als eine Abstandstabelle festgelegt ist,
die Datentabelle einen Satz von einem Anteil [[i]] der Daten-ID i und dem Anteil ([[xᵢ₁]], ..., [[x_{iN}]]) der Daten (xᵢ₁, ..., x_{iN}) der Daten-ID i als einen i-ten Datensatz, mit i = 1, ..., M, enthält,
das System für sichere Clusterberechnung Folgendes aufweist:
ein Schwerpunkttabelleninitialisierungsmittel (210), das eine Tabelle, die einen Satz von einem Anteil [[j]] einer Cluster-ID j und einem Anteil ([[cⱼ₁]], ..., [[c_{jN}]]) eines Schwerpunkts (cⱼ₁, ..., c_{jN}) der Cluster-ID j, wobei die Anteile durch ein vorbestimmtes Verfahren berechnet werden, als einen j-ten Datensatz, mit j = 1, ..., K, enthält, als einen Anfangswert der Schwerpunkttabelle festlegt;
ein Abstandstabellenberechnungsmittel (220), das die Datentabelle und die Schwerpunkttabelle dazu verwendet, eine Abstandstabelle zu berechnen, die einen Satz von dem Anteil [[i]] der Daten-ID i, dem Anteil [[j]] der Cluster-ID j, einem Anteil [[dᵢⱼ]] eines Abstands dᵢⱼ zwischen den Daten (xᵢ₁, ..., x_{iN}) der Daten-ID i und dem Schwerpunkt (cⱼ₁, ..., c_{jN}) der Cluster-ID j als einen M(j-1)+i-ten Datensatz, mit i = 1, ..., M, und j = 1, ..., K, enthält;
ein Cluster-ID-Tabellenberechnungsmittel (230), das eine Cluster-ID-Tabelle, die einen Satz von dem Anteil [[i]] der Daten-ID i und dem Anteil [[k(i)]] der Cluster-ID k(i) des Clusters, zu dem die Daten der Daten-ID i gehören, enthält, als den i-ten Datensatz, mit i = 1, ..., M, unter Verwendung der Abstandstabelle berechnet; und
ein Schwerpunkttabellenberechnungsmittel (240), das die Schwerpunkttabelle unter Verwendung der Datentabelle und der Cluster-ID-Tabelle berechnet, und
das Schwerpunkttabelleninitialisierungsmittel (210) Folgendes enthält:
ein erstes Anfangswertfestlegungsmittel (211), das einen Anteil [[i₁]] einer Daten-ID aus Anteilen [[1]], ..., [[M]] zufällig auswählt und einen Satz von dem Anteil [[1]] der Cluster-ID 1 und dem Anteil ([[x_{i_11}]], ..., [[x_{i_1N}]]) der Daten (x_{i_11}, ..., x_{i_1N}) der Daten-ID i₁ als einen Anfangswert eines ersten Datensatzes der Schwerpunkttabelle festlegt,
ein erstes Vektorberechnungsmittel (212), das einen Anteil ([[d_{k_1}²/Σdk_{_m}²]], ..., [[d_{k_(M-j)}²/Σdk_{_m}²]]) eines Vektors (d_{k_1}²/Σdk_{_m}², ..., d_{k_(M-j)}²/Σdk_{_m}²), wobei d_{k_m} der kleinste Abstand von einem Abstand zwischen dem Schwerpunkt, der durch den ersten Datensatz der Schwerpunkttabelle spezifiziert ist, und den Daten der Daten-ID kₘ zu einem Abstand zwischen dem Schwerpunkt, der durch den j-ten Datensatz der Schwerpunkttabelle spezifiziert ist, und den Daten der Daten-ID kₘ ist, unter Verwendung eines Anteils ([[x_{k_11}]], ..., [[xk_{_(M-j)N}]]) von Daten (x_{k_11}, ..., x_{k_(M-j)N}), wobei kₘ, mit m = 1, ..., M-j, wobei j 1 ≤ j < K erfüllt, eine Daten-ID von Daten, die nicht als der Schwerpunkt ausgewählt ist, der Daten-ID kₘ berechnet, und
ein zweites Anfangswertfestlegungsmittel (213), das das System für sichere Zufallszahlberechnung nach Anspruch 1 dazu verwendet, einen Anteil [[iⱼ₊₁]] eines Ausgabewerts iⱼ₊₁, wobei iⱼ₊₁ gleich einer der Daten-IDs k₁, ..., k_{M-j} von Daten ist, die nicht als der Schwerpunkt ausgewählt sind, aus dem Anteil ([[k₁]], ..., [[k_{M-j}]]) des Vektors (k₁, ..., k_{M-j}) mit einer Daten-ID von Daten, die nicht als der Schwerpunkt ausgewählt ist, als ein Element und dem Anteil ([[d_{k_1}²/Σdk_{_m}²]], ..., [[d_{k_(M-j)}²/Σdk_{_m}²]]) des Vektors (d_{k_1}²/Σdk_{_m}², ..., d_{k_(M-j)}²/Σdk_{_m}²) zu berechnen, und einen Satz von dem Anteil [[j+1]] der Cluster-ID j+1 und dem Anteil ([[x_{i_(j+1)1}]], ..., [[x_{i_(j+1)N}]]) der Daten (x_{i_(j+1)1}, ..., x_{i_(j+1)N}) der Daten-ID iⱼ₊₁ als einen Anfangswert eines j+1-ten Datensatzes der Schwerpunkttabelle festlegt.

5. Vorrichtung für sichere Clusterberechnung, die in dem System für sichere Clusterberechnung nach Anspruch 4 enthalten ist,
wobei die Vorrichtung für sichere Clusterberechnung Folgendes aufweist:
eine Schwerpunkttabelleninitialisierungseinheit (210), die eine Tabelle, die einen Satz von einem Anteil [[j]] einer Cluster-ID j und einem Anteil ([[cⱼ₁]], ..., [[c_{jN}]]) eines Schwerpunkts (cⱼ₁, ..., c_{jN}) der Cluster-ID j, wobei die Anteile durch ein vorbestimmtes Verfahren berechnet werden, als einen j-ten Datensatz, mit j = 1, ..., K, enthält, als einen Anfangswert der Schwerpunkttabelle festlegt;
eine Abstandstabellenberechnungseinheit (220), die die Datentabelle und die Schwerpunkttabelle dazu verwendet, eine Abstandstabelle zu berechnen, die einen Satz von dem Anteil [[i]] der Daten-ID i, dem Anteil [[j]] der Cluster-ID j, einem Anteil [[dᵢⱼ]] eines Abstands dᵢⱼ zwischen den Daten (xᵢ₁, ..., x_{iN}) der Daten-ID i und dem Schwerpunkt (cⱼ₁, ..., c_{jN}) der Cluster-ID j als einen M(j-1)+i-ten Datensatz, mit i = 1, ..., M, und j = 1, ..., K, enthält;
eine Cluster-ID-Tabellenberechnungseinheit (230), die eine Cluster-ID-Tabelle, die einen Satz von dem Anteil [[i]] der Daten-ID i und dem Anteil [[k(i)]] der Cluster-ID k(i) des Clusters, zu dem die Daten der Daten-ID i gehören, enthält, als den i-ten Datensatz, mit i = 1, ..., M, unter Verwendung der Abstandstabelle berechnet; und
eine Schwerpunkttabellenberechnungseinheit (240), welche die Schwerpunkttabelle unter Verwendung der Datentabelle und der Cluster-ID-Tabelle berechnet, und
wobei die Schwerpunkttabelleninitialisierungseinheit (210) Folgendes enthält:
eine erste Anfangswertfestlegungseinheit (211), die einen Anteil [[i₁]] einer Daten-ID aus Anteilen [[1]], ..., [[M]] zufällig auswählt und einen Satz von dem Anteil [[1]] der Cluster-ID 1 und dem Anteil ([[x_{i_11}]], ..., [[x_{i_1N}]]) der Daten (x_{i_11}, ..., x_{i_1N}) der Daten-ID i₁ als einen Anfangswert eines ersten Datensatzes der Schwerpunkttabelle festlegt,
eine erste Vektorberechnungseinheit (212), die einen Anteil ([[d_{k_1}²/Σdk_{_m}²]], ..., [[d_{k_(M-j)}²/Σdk_{_m}²]]) eines Vektors (d_{k_1}²/Σdk_{_m}², ..., d_{k_(M-j)}²/Σdk_{_m}²), wobei d_{k_m} der kleinste Abstand von einem Abstand zwischen dem Schwerpunkt, der durch den ersten Datensatz der Schwerpunkttabelle spezifiziert ist, und den Daten der Daten-ID kₘ zu einem Abstand zwischen dem Schwerpunkt, der durch den j-ten Datensatz der Schwerpunkttabelle spezifiziert ist, und den Daten der Daten-ID kₘ ist, unter Verwendung eines Anteils ([[x_{k_11}]], ..., [[xk_{_(M-j)N}]]) von Daten (x_{k_11}, ..., x_{k_(M-j)N}), wobei kₘ, mit m = 1, ..., M-j, wobei j 1 ≤ j < K erfüllt, eine Daten-ID von Daten, die nicht als der Schwerpunkt ausgewählt ist, der Daten-ID kₘ berechnet, und
eine zweite Anfangswertfestlegungseinheit (213), welche die Vorrichtung für sichere Zufallszahlberechnung nach Anspruch 2 dazu verwendet, einen Anteil [[iⱼ₊₁]] eines Ausgabewerts iⱼ₊₁, wobei iⱼ₊₁ gleich einer der Daten-IDs k₁, ..., k_{M-j} der Daten ist, die nicht als der Schwerpunkt ausgewählt ist, aus dem Anteil ([[k₁]], ..., [[k_{M-j}]]) des Vektors (k₁, ..., k_{M-j}) mit einer Daten-ID von Daten, die nicht als der Schwerpunkt ausgewählt ist, als ein Element und dem Anteil ([[d_{k_1}²/Σdk_{_m}²]], ..., [[d_{k_(M-j)}²/Σdk_{_m}²]]) des Vektors (d_{k_1}²/Σdk_{_m}², ..., d_{k_(M-j)}²/Σdk_{_m}²) zu berechnen, und einen Satz von dem Anteil [[j+1]] der Cluster-ID j+1 und dem Anteil ([[x_{i_(j+1)1}]], ..., [[x_{i_(j+1)N}]]) der Daten (x_{i_(j+1)1}, ..., x_{i_(j+1)N}) der Daten-ID iⱼ₊₁ als einen Anfangswert eines j+1-ten Datensatzes der Schwerpunkttabelle festlegt.

6. Verfahren für sichere Clusterberechnung, das durch ein System für sichere Clusterberechnung mit M, wobei M eine ganze Zahl von 1 oder mehr ist, als die Anzahl von Daten, K, wobei K eine ganze Zahl von 1 oder mehr ist, als die Anzahl von Clustern, N, wobei N eine ganze Zahl von 1 oder mehr ist, als eine Dimension von Daten, und (xᵢ₁, ..., x_{iN}), mit i = 1, ..., M, als Daten einer Daten-ID i durchgeführt wird und das drei oder mehr Vorrichtungen für sichere Clusterberechnung enthält, zum Berechnen eines Anteils [[k(i)]] einer Cluster-ID k(i), wobei k(i) 1 ≤ k(i) ≤ K erfüllt, eines Clusters, zu dem die Daten der Daten-ID i gehören, aus Anteilen ([[xᵢ₁]], ..., [[x_{iN}]]), mit i = 1, ..., M, von M Datenelementen (xᵢ₁, ..., x_{iN}), wobei [[x]], bezeichnet als ein Anteil von x, ein Wert ist, der durch Verbergen von x durch sichere Verteilung erhalten wird,
wobei eine Tabelle, die eine Daten-ID und eine Cluster-ID eines Clusters enthält, zu dem Daten der Daten-ID als Attribute gehören, im Folgenden als ein Daten-ID-Attribut und ein Cluster-ID-Attribut bezeichnet, als eine Cluster-ID-Tabelle festgelegt ist, eine Tabelle, die eine Daten-ID und Daten der Daten-ID als Attribute enthält, im Folgenden als ein Daten-ID-Attribut und ein Datenattribut bezeichnet, als eine Datentabelle festgelegt ist, eine Tabelle, die eine Cluster-ID und einen Schwerpunkt eines Clusters der Cluster-ID als Attribute enthält, im Folgenden als ein Cluster-ID-Attribut und ein Schwerpunktattribut bezeichnet, als eine Schwerpunkttabelle festgelegt ist, und eine Tabelle, die eine Daten-ID, eine Cluster-ID und einen Abstand zwischen Daten der Daten-ID und einem Schwerpunkt eines Clusters der Cluster-ID als Attribute enthält, im Folgenden als ein Daten-ID-Attribut, ein Cluster-ID-Attribut und ein Abstandsattribut bezeichnet, als eine Abstandstabelle festgelegt ist,
die Datentabelle einen Satz von einem Anteil [[i]] der Daten-ID i und dem Anteil ([[xᵢ₁]], ..., [[x_{iN}]]) der Daten (xᵢ₁, ..., x_{iN}) der Daten-ID i als einen i-ten Datensatz, mit i = 1, ..., M, enthält,
wobei das Verfahren für sichere Clusterberechnung Folgendes aufweist:
einen Schwerpunkttabelleninitialisierungsschritt (S210) des Festlegens einer Tabelle, die einen Satz von einem Anteil [[j]] einer Cluster-ID j und einem Anteil ([[cⱼ₁]], ..., [[c_{jN}]]) eines Schwerpunkts (cⱼ₁, ..., c_{jN}) der Cluster-ID j, wobei die Anteile durch ein vorbestimmtes Verfahren berechnet werden, als einen j-ten Datensatz, mit j = 1, ..., K, enthält, als einen Anfangswert der Schwerpunkttabelle durch das System für sichere Clusterberechnung;
einen Abstandstabellenberechnungsschritt (S220) des Verwendens der Datentabelle und der Schwerpunkttabelle zum Berechnen einer Abstandstabelle, die einen Satz von dem Anteil [[i]] der Daten-ID i, dem Anteil [[j]] der Cluster-ID j, einem Anteil [[dᵢⱼ]] eines Abstands dᵢⱼ zwischen den Daten (xᵢ₁, ..., x_{iN}) der Daten-ID i und dem Schwerpunkt (cⱼ₁, ..., c_{jN}) der Cluster-ID j als einen M(j-1)+i-ten Datensatz, mit i = 1, ..., M, und j = 1, ..., K, enthält, durch das System für sichere Clusterberechnung;
einen Cluster-ID-Tabellenberechnungsschritt (S230) des Berechnens einer Cluster-ID-Tabelle, die einen Satz von dem Anteil [[i]] der Daten-ID i und dem Anteil [[k(i)]] der Cluster-ID k(i) des Clusters, zu dem die Daten der Daten-ID i gehören, enthält, als den i-ten Datensatz, mit i = 1, ..., M, unter Verwendung der Abstandstabelle durch das System für sichere Clusterberechnung; und
einen Schwerpunkttabellenberechnungsschritt (S240) des Berechnens der Schwerpunkttabelle unter Verwendung der Datentabelle und der Cluster-ID-Tabelle durch das System für sichere Clusterberechnung, und
wobei der Schwerpunkttabelleninitialisierungsschritt (S210) Folgendes enthält:
einen ersten Anfangswertfestlegungsschritt (S211) des zufälligen Auswählens eines Anteils [[i₁]] einer Daten-ID aus Anteilen [[1]], ..., [[M]] und des Festlegens eines Satzes von dem Anteil [[1]] der Cluster-ID 1 und dem Anteil ([[x_{i_11}]], ..., [[x_{i_1N}]]) der Daten (x_{i_11}, ..., x_{i_1N}) der Daten-ID i₁ als einen Anfangswert eines ersten Datensatzes der Schwerpunkttabelle,
einen ersten Vektorberechnungsschritt (S212) des Berechnens eines Anteils ([[d_{k_1}²/Σdk_{_m}²]], ..., [[d_{k_(M-j)}²/Σdk_{_m}²]]) eines Vektors (d_{k_1}²/Σdk_{_m}², ..., d_{k_(M-j)}²/Σdk_{_m}²), wobei d_{k_m} der kleinste Abstand von einem Abstand zwischen dem Schwerpunkt, der durch den ersten Datensatz der Schwerpunkttabelle spezifiziert ist, und den Daten der Daten-ID kₘ zu einem Abstand zwischen dem Schwerpunkt, der durch den j-ten Datensatz der Schwerpunkttabelle spezifiziert ist, und den Daten der Daten-ID kₘ ist, unter Verwendung eines Anteils ([[x_{k_11}]], ..., [[xk_{_(M-j)N}]]) von Daten (x_{k_11}, ..., x_{k_(M-j)N}), wobei kₘ, mit m = 1, ..., M-j, wobei j 1 ≤ j < K erfüllt, eine Daten-ID von Daten, die nicht als der Schwerpunkt ausgewählt ist, der Daten-ID kₘ, und
einen zweiten Anfangswertfestlegungsschritt (S213) des Verwendens des Verfahrens für sichere Zufallszahlberechnung nach Anspruch 3 dazu, einen Anteil [[iⱼ₊₁]] eines Ausgabewerts iⱼ₊₁, wobei iⱼ₊₁ gleich einer der Daten-IDs k₁, ..., k_{M-j} von Daten ist, die nicht als der Schwerpunkt ausgewählt ist, aus dem Anteil ([[k₁]], ..., [[k_{M-j}]]) des Vektors (k₁, ..., k_{M-j}) mit einer Daten-ID von Daten, die nicht als der Schwerpunkt ausgewählt ist, als ein Element und dem Anteil ([[d_{k_1}²/Σdk_{_m}²]], ..., [[d_{k_(M-j)}²/Σdk_{_m}²]]) des Vektors (d_{k_1}²/Σdk_{_m}², ..., d_{k_(M-j)}²/Σdk_{_m}²) zu berechnen, und einen Satz von dem Anteil [[j+1]] der Cluster-ID j+1 und dem Anteil ([[x_{i_(j+1)1}]], ..., [[x_{i_(j+1)N}]]) der Daten (x_{i_(j+1)1}, ..., x_{i_(j+1)N}) der Daten-ID iⱼ₊₁ als einen Anfangswert eines j+1-ten Datensatzes der Schwerpunkttabelle festlegt.

7. Programm zum Bewirken, dass ein Computer als die Vorrichtung für sichere Zufallszahlberechnung nach Anspruch 2 fungiert.

8. Programm zum Bewirken, dass ein Computer als die Vorrichtung für sichere Clusterberechnung nach Anspruch 5 fungiert.

## Revendications

1. Système de calcul de nombre aléatoire sécurisé ayant L et S qui sont des entiers de 1 ou plus, comprenant trois dispositifs de calcul de nombre aléatoire sécurisé ou plus, et configuré pour calculer une part ([[r₁]], ..., [[r_{S}]]) d'un vecteur (r₁, ..., r_{S}), où rᵢ, avec i = 1, ..., S, est égal à l'une de valeurs de possibilité de sortie x₁, ..., x_{L}, ayant une valeur de sortie en tant qu'élément, à partir d'une part ([[x₁]], ..., [[x_{L}]]) d'un vecteur (x₁, ..., x_{L}) ayant une valeur de possibilité de sortie en tant qu'élément et d'une part ([[p₁]], ..., [[p_{L}]]) d'un vecteur (p₁, ..., p_{L}), où pᵢ, avec i = 1, ..., L, est une probabilité que la valeur de possibilité de sortie xᵢ soit sortie, et satisfait Σpᵢ = 1, ayant une probabilité de sortie en tant qu'élément, dans lequel [[x]], désigné en tant que part de x, est une valeur obtenue en dissimulant x par distribution sécurisée,
le système de calcul de nombre aléatoire sécurisé comprenant :
un premier moyen de calcul de vecteur (110) qui calcule une part ([[p'₁]], ..., [[p'_{L}]]) d'un vecteur (p'₁, ..., p'_{L}) à partir de la part ([[p₁]], ..., [[p_{L}]]) du vecteur (p₁, ..., p_{L}) par ([[p'₁]], ..., [[p'_{L}]]) = prefix_sum(([[p₁]], ..., [[p_{L}]])), dans lequel le prefix_sum utilise la part [[^{→}x]] du vecteur à N dimensions ^{→}x = (x₁, ..., x_{N}) en tant qu'entrée, et sort la part [[^{→} y]] = ([[y₁]], ..., [y_{N}]), où yᵢ = Σⱼ = ₁ⁱxⱼ, du vecteur à N dimensions ^{→}y ;
un moyen de génération de nombre aléatoire uniforme (120) qui génère une part ([[q₁]], ..., [[q_{S}]]) d'un vecteur (q₁, ..., q_{S}), où qᵢ, avec i = 1, ..., S, est un nombre aléatoire uniforme, et satisfait 0 ≤ qᵢ ≤ 1, ayant un nombre aléatoire uniforme en tant qu'élément ; et
un moyen de calcul de nombre aléatoire (130) qui calcule une part ([[r₁]], ..., [[r_{S}]]) d'un vecteur (r₁, ..., r_{S}) ayant une valeur de sortie en tant qu'élément à partir de la part ([[p'₁]], ..., [[p'_{L}]]) du vecteur (p'₁, ..., p'_{L}), de la part ([[x₁]], ..., [[x_{L}]]) du vecteur (x₁, ..., x_{L}), et de la part ([[q₁]], ..., [[q_{S}]]) du vecteur (q₁, ..., q_{S}) par ([[r₁]], ..., [[r_{S}]]) = map(([[p'₁]], ..., [[p'_{L}]]), ([[x₁]], ..., [[x_{L}]]), ([[q₁]], ..., [[q_{S}]])), dans lequel [[^{→}y]] = map([[^{→}a], [[^{→} b]], [[^{→}x]]) est un mappage collectif sécurisé qui utilise la part [[^{→}a]] = ([[a₁]], ..., [[a_{K}]]) du vecteur ^{→}a = (a₁, ..., a_{K}), la part [[^{→}b]] = ([[b₁]], ..., [[b_{K}]]) du vecteur ^{→}b = (b₁, ..., b_{K}), où a₁, ..., a_{K}, b₁, ..., b_{K} sont des nombres réels, et satisfont a₁ < ... < a_{K}, et la part [^{→}x] = ([[x₁]], ..., [[x_{N}]]) du vecteur ^{→}x = (x₁, ..., x_{N}) en tant qu'entrées, et sorties [[^{→}y]] : = ([[y₁]], ..., [y_{N}]) de sorte que aₚ ≤ xₙ < aₚ₊₁ et yₙ = bₚ soient satisfaits pour 1 ≤ n ≤ N.

2. Dispositif de calcul de nombre aléatoire sécurisé inclus dans le système de calcul de nombre aléatoire sécurisé selon la revendication 1,
le dispositif de calcul de nombre aléatoire sécurisé comprenant :
une première unité de calcul de vecteur (110) qui calcule une part ([[p'₁]], ..., [[p'_{L}]]) d'un vecteur (p'₁, ..., p'_{L}) à partir de la part ([[p₁]], ..., [[p_{L}]]) du vecteur (p₁, ..., p_{L}) par ([[p'₁]], ..., [[p'_{L}]]) = prefix_sum(([[p₁]], ..., [[p_{L}]])) ;
une unité de génération de nombre aléatoire uniforme (120) qui génère une part ([[q₁]], ..., [[q_{S}]]) d'un vecteur (q₁, ..., q_{S}), où qᵢ, avec i = 1, ..., S, est un nombre aléatoire uniforme, et satisfait 0 ≤ qᵢ ≤ 1, ayant un nombre aléatoire uniforme en tant qu'élément ; et
une unité de calcul de nombre aléatoire (130) qui calcule une part ([[r₁]], ..., [[r_{S}]]) d'un vecteur (r₁, ..., r_{S}) ayant une valeur de sortie en tant qu'élément à partir de la part ([[p'₁]], ..., [[p'_{L}]]) du vecteur (p'₁, ..., p'_{L}), de la part ([[x₁]], ..., [[x_{L}]]) du vecteur (x₁, ..., x_{L}), et de la part ([[q₁]], ..., [[q_{S}]]) du vecteur (q₁, ..., q_{S}) par ([[r₁]], ..., [[r_{S}]]) = map(([[p'₁]], ..., [[p'_{L}]]), ([[x₁]], ..., [[x_{L}]]), ([[q₁]], ..., [[q_{S}]])).

3. Procédé de calcul de nombre aléatoire sécurisé, réalisé par un système de calcul de nombre aléatoire sécurisé comprenant trois dispositifs de calcul de nombre aléatoire sécurisé ou plus, consistant à calculer une part ([[r₁]], ..., [[r_{S}]]) d'un vecteur (r₁, ..., r_{S}), où rᵢ, avec i = 1, ..., S, est égal à l'une de valeurs de possibilité de sortie x₁, ..., x_{L}, ayant une valeur de sortie en tant qu'élément, à partir d'une part ([[x₁]], ..., [[x_{L}]]) d'un vecteur (x₁, ..., x_{L}) ayant une valeur de possibilité de sortie en tant qu'élément et d'une part ([[p₁]], ..., [[p_{L}]]) d'un vecteur (p₁, ..., p_{L}), où pᵢ, avec i = 1, ..., L, est une probabilité que la valeur de possibilité de sortie xᵢ soit sortie, et satisfait Σpᵢ = 1, ayant une probabilité de sortie en tant qu'élément, dans lequel [[x]], désigné en tant que part de x, est une valeur obtenue en dissimulant x par distribution sécurisée,
le procédé de calcul de nombre aléatoire sécurisé comprenant :
une première étape de calcul de vecteur (S110) consistant à calculer une part ([[p'₁]], ..., [[p'_{L}]]) d'un vecteur (p'₁, ..., p'_{L}) à partir de la part ([[p₁]], ..., [[p_{L}]]) du vecteur (p₁, ..., p_{L}) par ([[p'₁]], ..., [[p'_{L}]]) = prefix_sum(([[p₁]], ..., [[p_{L}]])), par le système de calcul de nombre aléatoire sécurisé, dans lequel le prefix_sum utilise la part [[^{→}x]] du vecteur à N dimensions ^{→}x = (x₁, ..., x_{N}) en tant qu'entrée, et sort la part [[^{→} y]] = ([[y₁]], ..., [y_{N}]), où yᵢ = Σⱼ = ₁ⁱxⱼ, du vecteur à N dimensions ^{→}y ;
une étape de génération de nombre aléatoire uniforme (S120) consistant à générer une part ([[q₁]], ..., [[q_{S}]]) d'un vecteur (q₁, ..., q_{S}), où qᵢ, avec i = 1, ..., S, est un nombre aléatoire uniforme, et satisfait 0 ≤ qᵢ ≤ 1, ayant un nombre aléatoire uniforme en tant qu'élément, par le système de calcul de nombre aléatoire sécurisé ; et
une étape de calcul de nombre aléatoire (S130) consistant à calculer une part ([[r₁]], ..., [[r_{S}]]) d'un vecteur (r₁, ..., r_{S}) ayant une valeur de sortie en tant qu'élément à partir de la part ([[p'₁]], ..., [[p'_{L}]]) du vecteur (p'₁, ..., p'_{L}), de la part ([[x₁]], ..., [[x_{L}]]) du vecteur (x₁, ..., x_{L}), et de la part ([[q₁]], ..., [[q_{S}]]) du vecteur (q₁, ..., q_{S}) par ([[r₁]], ..., [[r_{S}]]) = map(([[p'₁]], ..., [[p'_{L}]]), ([[x₁]], ..., [[x_{L}]]), ([[q₁]], ..., [[q_{S}]])), par le système de calcul de nombre aléatoire sécurisé, dans lequel [[^{→}y]] = map([[^{→}a], [[^{→}b]], [[^{→}x]]) est un mappage collectif sécurisé qui utilise la part [[^{→}a]] = ([[a₁]], ..., [[a_{K}]]) du vecteur ^{→}a = (a₁, ..., a_{K}), la part [[^{→}b]] = ([[b₁]], ..., [[b_{K}]]) du vecteur ^{→}b = (b₁, ..., b_{K}), où a₁, ..., a_{K}, b₁, ..., b_{K} sont des nombres réels, et satisfont a₁ < ... < a_{K}, et la part [^{→}x] = ([[x₁]], ..., [[x_{N}]]) du vecteur ^{→}x = (x₁, ..., x_{N}) en tant qu'entrées, et sorties [[^{→}y]] : = ([[y₁]], ..., [y_{N}]) de sorte que aₚ ≤ xₙ < aₚ₊₁ et yₙ = bₚ soient satisfaits pour 1 ≤ n ≤ N.

4. Système de calcul de grappe sécurisée ayant M, où M est un entier de 1 ou plus, en tant que nombre de données, K, où K est un entier de 1 ou plus, en tant que nombre de grappes, N, où N est un entier de 1 ou plus, en tant que dimension de données, et (xᵢ₁, ..., x_{iN}), avec i = 1, ..., M, en tant que données d'ID de données i,
comprenant trois dispositifs de calcul de grappe sécurisée ou plus, et configuré pour calculer une part [[k(i)]] d'un ID de grappe k(i), où k(i) satisfait 1 ≤ k(i) ≤ K, d'une grappe à laquelle les données de l'ID de données i appartiennent à partir de parts ([[xᵢ₁]], ..., [[x_{iN}]]), avec i = 1, ..., M, de M éléments de données (xᵢ₁, ..., x_{iN}), dans lequel [[x]], désigné en tant que part de x, est une valeur obtenue en dissimulant x par distribution sécurisée,
dans lequel une table qui comprend un ID de données et un ID de grappe d'une grappe à laquelle des données de l'ID de données appartiennent en tant qu'attributs, désignés ci-après en tant qu'attribut d'ID de données et attribut d'ID de grappe, est définie en tant que table d'ID de grappe, une table qui comprend un ID de données et des données de l'ID de données en tant qu'attributs, désignés ci-après en tant qu'attribut d'ID de données et attribut de données, est définie en tant que table de données, une table qui comprend un ID de grappe et un centroïde d'une grappe de l'ID de grappe en tant qu'attributs, désignés ci-après en tant qu'attribut d'ID de grappe et attribut de centroïde, est définie en tant que table de centroïde, et une table qui comprend un ID de données, un ID de grappe, et une distance entre des données de l'ID de données et un centroïde d'une grappe de l'ID de grappe en tant qu'attributs, désignés ci-après en tant qu'attribut d'ID de données, attribut d'ID de grappe, et attribut de distance, est définie en tant que table de distance,
la table de données comprend un ensemble d'une part [[i]] de l'ID de données i et de la part ([[xᵢ₁]], ..., [[x_{iN}]]) des données (xᵢ₁, ..., x_{iN}) de l'ID de données i en tant que ième enregistrement, avec i = 1, ..., M,
le système de calcul de grappe sécurisée comprend :
un moyen d'initialisation de table de centroïde (210) qui définit une table comprenant un ensemble d'une part [[j]] d'un ID de grappe j et d'une part ([[cⱼ₁]], ..., [[c_{jN}]]) d'un centroïde (cⱼ₁, ..., c_{jN}) de l'ID de grappe j, où les parts sont calculées par un procédé prédéterminé, en tant que jième enregistrement, avec j = 1, ..., K, en tant que valeur initiale de la table de centroïde ;
un moyen de calcul de table de distance (220) qui utilise la table de données et la table de centroïde pour calculer une table de distance comprenant un ensemble de la part [[i]] de l'ID de données i, de la part [[j]] de l'ID de grappe j, d'une part [[dᵢⱼ]] d'une distance dᵢⱼ entre les données (xᵢ₁, ..., x_{iN}) de l'ID de données i et le centroïde (cⱼ₁, ..., c_{jN}) de l'ID de grappe j en tant que M(j-1)+ième enregistrement, avec i = 1, ..., M, et j = 1, ..., K ;
un moyen de calcul de table d'ID de grappe (230) qui calcule une table d'ID de grappe comprenant un ensemble de la part [[i]] de l'ID de données i et de la part [[k(i)]] de l'ID de grappe k(i) de la grappe à laquelle les données de l'ID de données i appartiennent en tant que ième enregistrement, avec i = 1, ..., M, en utilisant la table de distance ; et
un moyen de calcul de table de centroïde (240) qui calcule la table de centroïde en utilisant la table de données et la table d'ID de grappe, et
le moyen d'initialisation de table de centroïde (210) comprend
un premier moyen de définition de valeur initiale (211) qui sélectionne aléatoirement une part [[i₁]] d'un ID de données parmi des parts [[1]], ..., [[M]], et définit un ensemble de la part [[1]] de l'ID de grappe 1 et de la part ([[x_{i_11}]], ..., [[x_{i_1N}]]) des données (x_{i_11}, ..., x_{i_1N}) de l'ID de données i₁ en tant que valeur initiale d'un premier enregistrement de la table de centroïde,
un premier moyen de calcul de vecteur (212) qui calcule une part ([[d_{k_1}²/Σdk_{_m}²]], ..., [[d_{k_(M-j)}²/Σdk_{_m}²]]) d'un vecteur (d_{k_1}²/Σdk_{_m}², ..., d_{k_(M-j)}²/Σdk_{_m}²), où d_{k_m} est la plus petite distance d'une distance entre le centroïde spécifié par le premier enregistrement de la table de centroïde et les données de l'ID de données kₘ à une distance entre le centroïde spécifié par le jième enregistrement de la table de centroïde et les données de l'ID de données kₘ, en utilisant une part ([[x_{k_11}]], ..., [[xk_{_(M-j)N}]]) de données (x_{k_11}, ..., x_{k_(M-j)N}), où kₘ, avec m = 1, ..., M-j, où j satisfait 1 ≤ j < K, est un ID de données de données qui n'est pas sélectionné en tant que centroïde, de l'ID de données kₘ, et
un second moyen de définition de valeur initiale (213) qui utilise le système de calcul de nombre aléatoire sécurisé selon la revendication 1 pour calculer une part [[iⱼ₊₁]] d'une valeur de sortie iⱼ₊₁, où iⱼ₊₁ est égal à l'un des ID de données k₁, ..., k_{M-j} de données non sélectionnées en tant que centroïde, à partir de la part ([[k₁]], ..., [[k_{M-j}]]) du vecteur (k₁, ..., k_{M-j}) ayant un ID de données de données non sélectionnées en tant que centroïde en tant qu'élément et de la part ([[d_{k_1}²/Σdk_{_m}²]], ..., [[dk_{_(M-j)}²/Σdk_{_m}²]]) du vecteur (d_{k_1}²/Σdk_{_m}², ..., dk_{_(M-j)}²/Σdk_{_m}²), et définit un ensemble de la part [[j+1]] de l'ID de grappe j+1 et de la part ([[x_{i_(j+1)1}]], ..., [[xᵢ_(j₊₁)_{N}]]) des données (x_{i_(j+1)1}, ..., x_{i_(j+1)N}) de l'ID de données iⱼ₊₁ en tant que valeur initiale d'un j+1ième enregistrement de la table de centroïde.

5. Dispositif de calcul de grappe sécurisée inclus dans le système de calcul de grappe sécurisée selon la revendication 4,
le dispositif de calcul de grappe sécurisée comprend :
une unité d'initialisation de table de centroïde (210) qui définit une table comprenant un ensemble d'une part [[j]] d'un ID de grappe j et d'une part ([[cⱼ₁]], ..., [[c_{jN}]]) d'un centroïde (cⱼ₁, ..., c_{jN}) de l'ID de grappe j, où les parts sont calculées par un procédé prédéterminé, en tant que jième enregistrement, avec j = 1, ..., K, en tant que valeur initiale de la table de centroïde ;
une unité de calcul de table de distance (220) qui utilise la table de données et la table de centroïde pour calculer une table de distance comprenant un ensemble de la part [[i]] de l'ID de données i, de la part [[j]] de l'ID de grappe j, d'une part [[dᵢⱼ]] d'une distance dᵢⱼ entre les données (xᵢ₁, ..., x_{iN}) de l'ID de données i et le centroïde (cⱼ₁, ..., c_{jN}) de l'ID de grappe j en tant que M(j-1)+ième enregistrement, avec i = 1, ..., M, et j = 1, ..., K ;
une unité de calcul de table d'ID de grappe (230) qui calcule une table d'ID de grappe comprenant un ensemble de la part [[i]] de l'ID de données i et de la part [[k(i)]] de l'ID de grappe k(i) de la grappe à laquelle les données de l'ID de données i appartiennent en tant que ième enregistrement, avec i = 1, ..., M, en utilisant la table de distance ; et
une unité de calcul de table de centroïde (240) qui calcule la table de centroïde en utilisant la table de données et la table d'ID de grappe, et
l'unité d'initialisation de table de centroïde (210) comprend
une première unité de définition de valeur initiale (211) qui sélectionne aléatoirement une part [[i₁]] d'un ID de données parmi des parts [[1]], ..., [[M]], et définit un ensemble de la part [[1]] de l'ID de grappe 1 et de la part ([[x_{i_11}]], ..., [[x_{i_1N}]]) des données (x_{i_11}, ..., x_{i_1N}) de l'ID de données i₁ en tant que valeur initiale d'un premier enregistrement de la table de centroïde,
une première unité de calcul de vecteur (212) qui calcule une part ([[d_{k_1}²/Σdk_{_m}²]], ..., [[d_{k_(M-j)}²/Σdk_{_m}²]]) d'un vecteur (d_{k_1}²/Σdk_{_m}², ..., d_{k_(M-j)}²/Σdk_{_m}²), où d_{k_m} est la plus petite distance d'une distance entre le centroïde spécifié par le premier enregistrement de la table de centroïde et les données de l'ID de données kₘ à une distance entre le centroïde spécifié par le jième enregistrement de la table de centroïde et les données de l'ID de données kₘ, en utilisant une part ([[x_{k_11}]], ..., [[xk_{_(M-j)N}]]) de données (x_{k_11}, ..., x_{k_(M-j)N}), où kₘ, avec m = 1, ..., M-j, où j satisfait 1 ≤ j < K, est un ID de données de données qui n'est pas sélectionné en tant que centroïde, de l'ID de données kₘ, et
une seconde unité de définition de valeur initiale (213) qui utilise le dispositif de calcul de nombre aléatoire sécurisé selon la revendication 2 pour calculer une part [[iⱼ₊₁]] d'une valeur de sortie iⱼ₊₁, où iⱼ₊₁ est égal à l'un des ID de données k₁, ..., k_{M-j} des données non sélectionnées en tant que centroïde, à partir de la part ([[k₁]], ..., [[k_{M-j}]]) du vecteur (k₁, ..., k_{M-j}) ayant un ID de données de données non sélectionnées en tant que centroïde en tant qu'élément et de la part ([[d_{k_1}²/Σdk_{_m}²]], ..., [[dk_{_(M-j)}²/Σdk_{_m}²]]) du vecteur (d_{k_1}²/Σdk_{_m}², ..., dk_{_(M-j)}²/Σdk_{_m}²), et définit un ensemble de la part [[j+1]] de l'ID de grappe j+1 et de la part ([[x_{i_(j+1)1}]], ..., [[x_{i_}(_{j+1)N}]]) des données (x_{i_(j+1)1}, ..., x_{i_(j+1)N}) de l'ID de données iⱼ₊₁ en tant que valeur initiale d'un j+1ième enregistrement de la table de centroïde.

6. Procédé de calcul de grappe sécurisée, réalisé par un système de calcul de grappe sécurisée ayant M, où M est un entier de 1 ou plus, en tant que nombre de données, K, où K est un entier de 1 ou plus, en tant que nombre de grappes, N, où N est un entier de 1 ou plus, en tant que dimension de données, et (xᵢ₁, ..., x_{iN}), avec i = 1, ..., M, en tant que données d'un ID de données i, et comprenant trois dispositifs de calcul de grappe sécurisée ou plus, de calcul d'une part [[k(i)]] d'un ID de grappe k(i), où k(i) satisfait 1 ≤ k(i) ≤ K, d'une grappe à laquelle les données de l'ID de données i appartiennent à partir de parts ([[xᵢ₁]], ..., [[x_{iN}]]), avec i = 1, ..., M, de M éléments de données (xᵢ₁, ..., x_{iN}), dans lequel [[x]], désigné en tant que part de x, est une valeur obtenue en dissimulant x par distribution sécurisée,
dans lequel une table qui comprend un ID de données et un ID de grappe d'une grappe à laquelle des données de l'ID de données appartiennent en tant qu'attributs, désignés ci-après en tant qu'attribut d'ID de données et attribut d'ID de grappe, est définie en tant que table d'ID de grappe, une table qui comprend un ID de données et des données de l'ID de données en tant qu'attributs, désignés ci-après en tant qu'attribut d'ID de données et attribut de données, est définie en tant que table de données, une table qui comprend un ID de grappe et un centroïde d'une grappe de l'ID de grappe en tant qu'attributs, désignés ci-après en tant qu'attribut d'ID de grappe et attribut de centroïde, est définie en tant que table de centroïde, et une table qui comprend un ID de données, un ID de grappe, et une distance entre des données de l'ID de données et un centroïde d'une grappe de l'ID de grappe en tant qu'attributs, désignés ci-après en tant qu'attribut d'ID de données, attribut d'ID de grappe, et attribut de distance, est définie en tant que table de distance,
la table de données comprend un ensemble d'une part [[i]] de l'ID de données i et de la part ([[xᵢ₁]], ..., [[x_{iN}]]) des données (xᵢ₁, ..., x_{iN}) de l'ID de données i en tant que ième enregistrement, avec i = 1, ..., M,
le procédé de calcul de grappe sécurisée comprend :
une étape d'initialisation de table de centroïde (S210) de définition d'une table comprenant un ensemble d'une part [[j]] d'un ID de grappe j et d'une part ([[cⱼ₁]], ..., [[c_{jN}]]) d'un centroïde (cⱼ₁, ..., c_{jN}) de l'ID de grappe j, où les parts sont calculées par un procédé prédéterminé, en tant que jième enregistrement, avec j = 1, ..., K, en tant que valeur initiale de la table de centroïde, par le système de calcul de grappe sécurisée ;
une étape de calcul de table de distance (S220) d'utilisation de la table de données et de la table de centroïde pour calculer une table de distance comprenant un ensemble de la part [[i]] de l'ID de données i, de la part [[j]] de l'ID de grappe j, d'une part [[dᵢⱼ]] d'une distance dᵢⱼ entre les données (xᵢ₁, ..., x_{iN}) de l'ID de données i et le centroïde (cⱼ₁, ..., c_{jN}) de l'ID de grappe j en tant que M(j-1)+ième enregistrement, avec i = 1, ..., M, et j = 1, ..., K, par le système de calcul de grappe sécurisée ;
une étape de calcul de table d'ID de grappe (S230) de calcul d'une table d'ID de grappe comprenant un ensemble de la part [[i]] de l'ID de données i et de la part [[k(i)]] de l'ID de grappe k(i) de la grappe à laquelle les données de l'ID de données i appartiennent en tant que ième enregistrement, avec i = 1, ..., M, en utilisant la table de distance, par le système de calcul de grappe sécurisée ; et
une étape de calcul de table de centroïde (S240) de calcul de la table de centroïde en utilisant la table de données et la table d'ID de grappe, par le système de calcul de grappe sécurisée, et
l'étape d'initialisation de table de centroïde (S210) comprend
une première étape de définition de valeur initiale (S211) de sélection aléatoire d'une part [[i₁]] d'un ID de données parmi des parts [[1]], ..., [[M]], et de définition d'un ensemble de la part [[1]] de l'ID de grappe 1 et de la part ([[x_{i_11}]], ..., [[x_{i_1N}]]) des données (x_{i_11}, ..., x_{i_1N}) de l'ID de données i₁ en tant que valeur initiale d'un premier enregistrement de la table de centroïde,
une première étape de calcul de vecteur (S212) de calcul d'une part ([[d_{k_1}²/Σdk_{_m}²]], ..., [[d_{k_(M-j)}²/Σdk_{_m}²]]) d'un vecteur (d_{k_1}²/Σdk_{_m}², ..., d_{k_(M-j)}²/Σdk_{_m}²), où d_{k_m} est la plus petite distance d'une distance entre le centroïde spécifié par le premier enregistrement de la table de centroïde et les données de l'ID de données kₘ à une distance entre le centroïde spécifié par le jième enregistrement de la table de centroïde et les données de l'ID de données kₘ, en utilisant une part ([[x_{k_11}]], ..., [[xk_{_(M-j)N}]]) de données (x_{k_11}, ..., x_{k_(M-j)N}), où kₘ, avec m = 1, ..., M-j, où j satisfait 1 ≤ j < K, est un ID de données de données qui n'est pas sélectionné en tant que centroïde, de l'ID de données kₘ, et
une seconde étape de définition de valeur initiale (S213) d'utilisation du procédé de calcul de nombre aléatoire sécurisé selon la revendication 3 pour calculer une part [[iⱼ₊₁]] d'une valeur de sortie iⱼ₊₁, où iⱼ₊₁ est égal à l'un des ID de données k₁, ..., k_{M-j} de données non sélectionnées en tant que centroïde, à partir de la part ([[k₁]], ..., [[k_{M-j}]]) du vecteur (k₁, ..., k_{M-j}) ayant un ID de données de données non sélectionnées en tant que centroïde en tant qu'élément et de la part ([[d_{k_1}²/Σdk_{_m}²]], ..., [[dk_{_(M-j)}²/Σdk_{_m}²]]) du vecteur (d_{k_1}²/Σdk_{_m}², ..., dk_{_(M-j)}²/Σdk_{_m}²), et de définition d'un ensemble de la part [[j+1]] de l'ID de grappe j+1 et de la part ([[x_{i_(j+1)1}]], ..., [[xᵢ_₍j+₁)_{N}]]) des données (x_{i_(j+1)1}, ..., x_{i_}(_{j+1)N}) de l'ID de données iⱼ₊₁ en tant que valeur initiale d'un j+1ième enregistrement de la table de centroïde.

7. Programme pour amener un ordinateur à fonctionner en tant que dispositif de calcul de nombre aléatoire sécurisé selon la revendication 2.

8. Programme pour amener un ordinateur à fonctionner en tant que dispositif de calcul de grappe sécurisée selon la revendication 5.
